# EUROPÄISCHE PATENTSCHRIFT

(11) **EP 1 860 410 B1**
(45) Veröffentlichungstag und Bekanntmachung des Hinweises auf die Patenterteilung: **21.11.2018**
(21) Anmeldenummer: 06114322.8
(22) Anmeldetag: 22.05.2006
(51) Int. Cl.: G01G 23/10, G01G 3/14, G01G 3/147

(54) **Verfahren zur Verarbeitung des Ausgangssignals eines Messumformers sowie Kraftmessvorrichtung**
Method for processing the output signal of a transducer and force measuring device
Procédé de traitement du signal de sortie d'un transducteur de mesure tout comme dispositif de mesure de force

(43) Veröffentlichungstag der Anmeldung: 28.11.2007
(73) Patentinhaber: Mettler-Toledo GmbH, 8606 Greifensee (CH)
(72) Erfinder: Nussbaumer, Marc, 8044, Zürich (CH); Reber, Daniel, 8322, Madetswil (CH)
(74) Vertreter: Mettler-Toledo

(56) Entgegenhaltungen:
- EP-A1- 0 291 553
- EP-A1- 2 071 304
- WO-A-03/063351
- WO-A-03/065579
- CH-A- 673 529
- DE-A1- 4 243 351
- GB-A- 2 257 793
- US-A- 3 860 802
- US-A- 4 977 526
- US-A1- 2002 185 318
- US-B1- 6 271 484
- US-B1- 6 857 002

## Beschreibung

Die Erfindung betrifft ein Verfahren zur Verarbeitung des Ausgangssignals eines Messumformers sowie eine nach diesem Verfahren arbeitende, mit einem solchen Messumformer versehene Kraftmessvorrichtung, insbesondere eine Waage.

Die Messgenauigkeit einer Kraftmessvorrichtung, beispielsweise einer Waage mit elektromagnetischer Kraftkompensation oder DMS-Technologie (siehe [1], Bauen Sie Ihre Qualität auf solidem Grund!, Firmenbrochure, Mettler-Toledo GmbH, Januar 2001, Seiten 14 - 15) wird durch zahlreiche Einflussfaktoren bestimmt, die in [2], Wägefibel, Mettler-Toledo GmbH, April 2001 beschrieben sind. Besonders störend sind mechanische Einwirkungen, wie Vibrationen oder Stösse, weshalb bereits in Waagen mit analoger Signalverarbeitung Filter vorgesehen wurden, die der Beseitigung von störenden Signalanteilen dienten.

Aus [3], CH 673 529 A5 ist eine Waage mit einem aktiven Tiefpass-Filter bekannt, das zur Unterdrückung von Störsignalen vorgesehen ist, die in Form von Störwechselströmen dem von der Wägezelle abgegebenen und über eine Signalleitung einem Analog-Digital-Wandler zugeführten Gleichstrom überlagert sind. Die Störsignale werden am Signalausgang der Wägezelle aus der Signalleitung ausgekoppelt, durch einen Inverter in ihrer Phase um 180° gedreht und am Signaleingang des Analog-Digital-Wandlers wieder in die Signalleitung eingekoppelt, wobei zwischen dem Auskopplungsknoten und dem Einkopplungsknoten ein ohmscher Widerstand in die Signalleitung eingeschaltet ist. Die Störsignale werden daher durch entsprechende, gegenphasige Signalanteile ausgelöscht.

In [4], DE 10024986 A1 ist ein elektronischer Wägeaufnehmer mit einer digitalen Signalverarbeitungseinheit beschrieben, bei der mit Hilfe eines eine Tiefpasscharakteristik aufweisenden Filters aus dem Ausgangssignal des Wägeaufnehmers der Gleichanteil ermittelt und daraus das Wägeergebnis abgeleitet wird. Dabei wird ein erschütterungsabhängiges Signal ermittelt und in Abhängigkeit dessen der Gleichanteil des Messsignals verändert. Gemäss [4] werden dadurch Nachteile vermieden, die bei der aus [5], US 5,665,941 bekannten Lösung auftreten.

Gemäss [5] wird bei einer Differenzialdosierwaage in Abhängigkeit vom Störsignal die Zeitkonstante des Tiefpassfilters verändert. Dabei wird bei grossen Störungen die Zeitkonstante des Tiefpassfilters verlängert, um eine stärkere Filterwirkung zu erzielen. Dies macht gemäss [4] die Reaktion des Wägeaufnehmers auf Wechsel jedoch langsam und erhöht die Reproduzierbarkeit der Messungen nur unwesentlich. Sofern die Zeitkonstante zu gross gewählt ist, resultiert zudem eine lange Einschwingzeit beim Auftreten von Lastwechseln.

Aus [6], US 2004/0088342 A1 und [7], US 6,271,484 B1 sind weitere Verfahren und zur Anwendung dieser Verfahren geeignete Waagen beschrieben, bei denen vom Messumformer abgegebene Signale mittels variabler digitaler Filter bearbeitet werden.

Das in [6] beschriebene Verfahren erlaubt die individuelle Anpassung der Charakteristik des verwendeten Filters an die Schwingungseigenschaften des kontrollierten Messsystems. Die Dämpfung des Filters kann daher in einem ausgewählten Frequenzbereich beliebig erhöht werden.

Gemäss dem in [7] beschriebenen Verfahren wird geprüft, ob die Amplitude der durch Vibrationen verursachten Störsignale in einem zulässigen Bereich liegt. Sofern dies nicht der Fall ist, wird die Filter-Charakteristik verändert, bis die Störsignale wieder innerhalb des zulässigen Bereichs liegen.

Insbesondere das zuletzt beschriebene Verfahren erfordert eine hohe Rechenleistung und erlaubt aufgrund der Zeitkonstante des Regelkreises kaum eine genügend schnelle Anpassung an rasch auftretende Änderungen der Amplituden auftretender Vibrationen und Schwingungen.

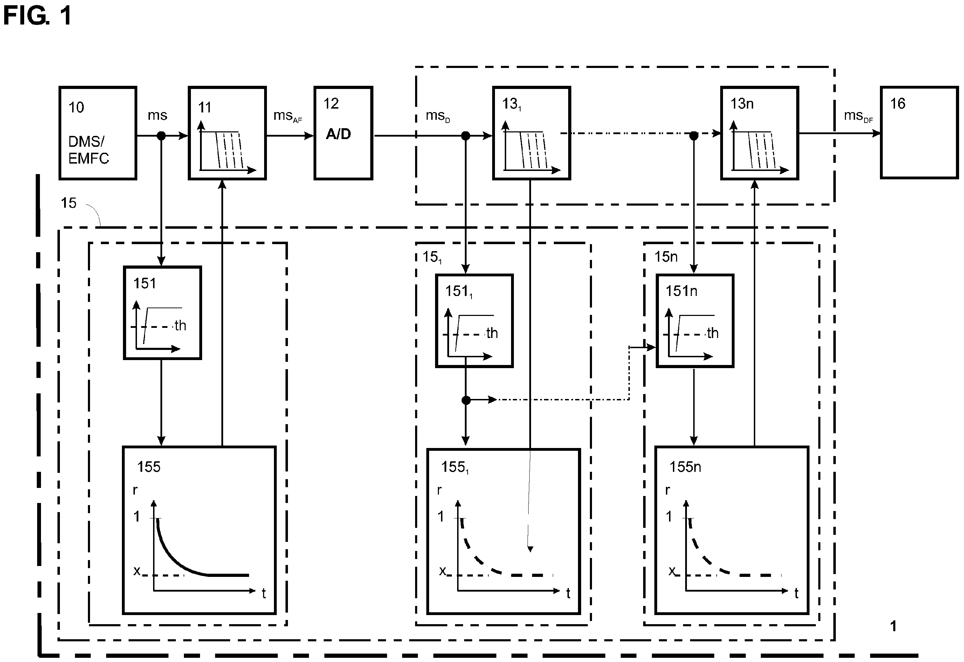

Besonders wesentlich sind Einwirkungen auf das Wägesystem, die bei Lastwechseln auftreten. Dabei treten nach einem Lastwechsel Schwingungen mit hoher Amplitude auf, die relativ rasch abklingen. Dabei soll mittels der in der Waage vorgesehen Filtervorrichtung eine möglichst gute Dämpfung dieser Lastwechsel-Schwingungen und gleichzeitig eine kurze Einschwingzeit des Wägesystems erzielt werden. Eine dazu geeignete Filtervorrichtung ist in Figur 1 gezeigt. Bei dieser Vorrichtung wird das Messsignal hinsichtlich des Auftretens eines Lastwechsels überwacht, wobei nach Detektion eines Lastwechsels, wenigstens ein Filterparameter des Filters zurück gesetzt und in Funktion der Zeit entsprechend einem vorgesehenen Verlauf, vorzugsweise dem Verlauf einer Exponentialfunktion geändert wird, so dass das Filter nach der Detektion des Lastwechsels geöffnet und bis zu einer vorgegebenen Filtercharakteristik wieder geschlossen wird, die durch den Endwert des wenigstens einen Filterparameters bestimmt ist. Realisiert werden Filterschaltungen dieser Art vorzugsweise mit digitalen Filtern.

Grundstrukturen digitaler Filter sind in [8], U. Tietze, Ch. Schenk, Halbleiterschaltungstechnik, 11. Auflage, 1. Nachdruck, Springer Verlag, Berlin 1999, Kapitel 21.3 beschrieben. In Abbildung 21.15 (siehe Seite 1145) ist ein digitales Filter gezeigt, das eine Verzögerungskette mit n Verzögerungsgliedern aufweist. Gemäss [8], (siehe Seite 1144) ergibt sich das Eingangssignal der Verzögerungskette aus dem beispielsweise von einem Messumformer abgegebenen Eingangssignal und der Summe aller gewichteten Zwischenwerte, die von den Ausgängen der Verzögerungsglieder abgeleitet werden. Entsprechend ist das Ausgangssignal die gewichtete Summe aller Zwischenwerte.

Daraus folgt, dass das Eingangssignal mit allen Änderungen und Überlagerungen über eine relativ lange Zeit innerhalb der Filterstufe erhalten bleibt. Es wäre daher wünschenswert, wenn innerhalb der analogen oder digitalen Filterstufe im wesentlichen nur Signalanteile verarbeitet würden, die in einem direkten Zusammenhang mit dem zu messenden Messgut stehen und weitere Signalanteile vollständig unterdrückt würden.

Die Unterdrückung von Störungen innerhalb einer Kraftmessvorrichtung wird dabei dadurch erschwert, dass die beispielsweise durch eine Laständerung verursachten Nutzsignale und die beispielsweise durch einen mechanischen Stoss oder Schlag verursachten Störsignale typischerweise ähnliche Signalverläufe aufweisen, weshalb deren Trennung Schwierigkeiten verursacht.

Der vorliegenden Erfindung liegt daher die Aufgabe zugrunde, ein verbessertes Verfahren zur Verarbeitung des Ausgangssignals eines Messumformers sowie eine nach dem erfindungsgemässen Verfahren arbeitende Kraftmessvorrichtung zu schaffen.

Insbesondere sind ein Verfahren und eine Kraftmessvorrichtung anzugeben, welche es einerseits erlauben, Störsignale, welche insbesondere durch mechanische Stösse oder Schläge verursacht werden, zuverlässig zu erkennen und zu unterdrücken und die andererseits gewährleisten, dass Nutzsignale den Signalverarbeitungspfad möglichst ungehindert durchlaufen können.

Mittels des Verfahrens und der Kraftmessvorrichtung soll es ferner möglich sein, Energieanteile von Störsignalen vollständig aus dem Signalverarbeitungspfad zu entfernen, so dass die Verarbeitung der Nutzsignale unbelastet von Störsignalen durchgeführt werden kann.

Diese Aufgabe wird mit einem Verfahren und einer Kraftmessvorrichtung gelöst, welche die in Anspruch 1 und Anspruch 10 angegebenen Merkmale aufweisen. Vorteilhafte Ausgestaltungen der Erfindung sind in weiteren Ansprüchen angegeben. Das erfindungsgemässe Verfahren dient der Verarbeitung des Ausgangssignals eines in einer Kraftmessvorrichtung, insbesondere einer Waage, vorgesehenen Messumformers, durch den ein einer einwirkenden Last entsprechendes Messsignal gebildet wird, das in einem analogen Filter und/oder, nach Verarbeitung in einem Analog/Digital-Wandler, in einem digitalen Filter, gefiltert wird, um durch äussere Einwirkungen, wie mechanische Störungen, Lastwechsel und Laständerungen verursachte störende Signalanteile zu unterdrücken.

Erfindungsgemäss wird das Messsignal einer Messwerteinheit zugeführt, mittels der an deren Ausgang
- der zugeführte und gehaltene Wert des Messsignals, oder
- ein aus den letzten innerhalb eines Zeitintervalls aufgetretenen Werten des Messsignals gebildeter Mittelwert, oder
- ein anhand der letzten innerhalb eines Zeitintervalls aufgetretenen Werte des Messsignals gebildeter Erwartungswert des Messsignals,
abgegeben wird.

Das Messsignal wird nun mittels eines in einer Steuereinheit vorgesehenen ersten Detektormoduls hinsichtlich des Auftretens von Störsignalen überwacht, wobei nach der Detektion eines Störsignals Schaltmittel derart betätigt werden, dass anstelle des zugeführten Messsignals das Ausgangssignal der Messwerteinheit den nachgeschalteten Modulen der Kraftmessvorrichtung, beispielsweise einer Filterstufe, einem Messprozessor oder einer Anzeigeeinheit geführt wird.

Gemäß der Erfindung erfolgt die Abgabe des Ausgangssignals am Ausgang der Messwerteinheit verzögert. Dies wird durch wenigstens ein der Messwerteinheit vorgeschaltetes erstes Verzögerungsglied realisiert.

Durch diese Verzögerung wird dabei bewirkt, dass eine Störung des Messsignals am Ausgang der Messwerteinheit noch nicht erscheint, wenn sie detektiert wird, weshalb ein noch ungestörtes Signal von der Messwerteinheit an die nachgeschalteten Module abgegeben wird. Zudem kann eine Störung besonders einfach erkannt werden, indem das aktuelle Messsignal mit dem verzögerten Ausgangssignal der Messwerteinheit verglichen wird.

Durch die erfindungsgemässen Massnahmen resultiert der Vorteil, dass Störungen nicht nur gefiltert, sondern vollständig ausgeblendet und durch das Ausgangssignal der Messwerteinheit ersetzt werden. Die Kraftmessvorrichtung liefert dem Anwender daher stets die bestmöglichen Messwerte, entweder basierend auf dem ungestörten Messsignal oder, bei Vorliegen einer Störung, basierend auf einem ein fast aktuellen bisherigen oder einem zu erwartenden Messwert.

Besonders vorteilhaft ist ferner, dass nach der beschriebenen Ausblendung von Störungen den nachgeschalteten Modulen des Signalverarbeitungspfads der Messvorrichtung keine wesentlichen Störsignale mehr zugeführt werden, welche die Signalverarbeitung belasten würden.

Einerseits werden daher durch Störungen verursachte Messfehler vermieden. Andererseits werden die Signalverarbeitungsstufen, insbesondere digitale Filter, nicht mit grösseren Energieanteilen von Signalstörungen belastet, weshalb die Messsignale rascher und mit höherer Präzision verarbeitet werden können.

Die vorgesehenen Schaltmittel können besonders einfach ausgestaltet werden, wenn das Messsignal über das erste Verzögerungsglied und eine erste Additionsstufe, in der das Ausgangssignal der Messwerteinheit vom Messsignal subtrahiert wird, sowie über die Schaltmittel einer zweiten Additionsstufe zugeführt wird, in der das Ausgangssignal der Messwerteinheit zum zugeführten Signal wieder addiert wird. Dadurch wird von der zweiten Additionsstufe bei geschlossenen Schaltmitteln das zugeführte Messsignal und bei geöffneten Schaltmitteln das Ausgangssignal der Messwerteinheit abgegeben und dem nachgeschalteten Signalverarbeitungspfad zugeführt.

In einer weiteren vorzugsweisen Ausgestaltung wird das Messsignal mittels eines in einer Steuereinheit vorgesehenen zweiten Detektormoduls hinsichtlich des Auftretens von Lastwechseln und/oder mittels eines dritten Detektormoduls hinsichtlich des Auftretens von Laständerungen überwacht, wonach bei Auftreten von Lastwechseln und/oder Laständerungen die Schaltmittel derart betätigt werden, dass das Messsignal die Schaltmittel bis zu deren Ausgang durchläuft.

Mittels des zweiten und des dritten Detektormoduls erfolgt daher eine Überprüfung der vom ersten Detektormodul festgestellten Störungen, wobei bei Feststellung eines Lastwechsels oder einer Laständerung das Messsignal durch die Schaltmittel durchgeschaltet wird, damit sich das Messsystem möglichst rasch an die erfolgte Änderung anpasst. Bei einem Lastwechsel liegt dabei eine grössere Änderung oder gar ein Austausch der Last vor. Bei Laständerungen handelt es sich typischerweise um geringe Änderungen, wie sie bei Dosiervorgängen typischerweise auftreten.

Bei der Detektion von Lastwechseln und oder Laständerungen werden die Filterparameter der Filterbaugruppen vorzugsweise derart gesteuert, dass kurze Einschwingvorgänge mit relativ kleinen Schwingungsamplituden resultieren. Beispielsweise wird wenigstens ein Filterparameter des Filters nach der Detektion eines Lastwechsels, zurück gesetzt und in Funktion der Zeit entsprechend einem vorgesehenen Verlauf, vorzugsweise dem Verlauf einer Exponentialfunktion geändert, so dass das Filter nach der Detektion des Lastwechsels geöffnet und bis zu einer vorgegebenen Filtercharakteristik wieder geschlossen wird, die durch den Endwert des wenigstens einen Filterparameters bestimmt ist.

Das vorzugsweise vollständige Öffnen des Filters nach der Detektion eines Lastwechsels erlaubt es, den Laständerungen rasch zu folgen. Durch das anschliessende Schliessen des Filters bis zu einer vorgesehenen Filtercharakteristik werden Signalstörungen, insbesondere durch den Lastwechsel verursachte Schwingungen, anschliessend praktisch optimal unterdrückt. Insgesamt resultieren daher stark verkürzte Einschwingzeiten nach einem Lastwechsel. Durch eine geeignete Wahl der Endwerte der Filterparameter wird zudem sichergestellt, dass das Messsignal auch nach dem Einschwingen des Messsystems optimal gefiltert wird.

In einer weiteren vorzugsweisen Ausgestaltung der Erfindung werden das Messsignal und das demgegenüber mittels des ersten und/oder eines zweiten Verzögerungsglieds zeitlich verzögerte Ausgangssignal der Messwerteinheit in der Steuereinheit einer Additionsstufe zugeführt, welche daraus ein Differenzsignal bildet, mittels dessen Störungen, Lastwechsel und Laständerungen einfacher festgestellt werden können.

Dabei wird das Differenzsignal bzw. dessen Betrag
- im ersten Detektormodul in einem ersten Schwellwertmodul mit einem festen oder variablen Schwellwert verglichen, um Störungen zu detektieren; und/oder
- im zweiten Detektormodul mit einem festen oder variablen Schwellwert verglichen, um Lastwechsel zu detektieren; und/oder
- im dritten Detektormodul ausgewertet, um festzustellen, ob eine Laständerung aufgetreten ist.

Im ersten Detektormodul wird vorzugsweise ein Statistikmodul vorgesehen, mittels dessen die Varianz des Differenzsignals berechnet und davon abhängig der Schwellwert im ersten Schwellwertmodul festgelegt wird. Dadurch kann eine kleine Ansprechschwelle gewählt werden, falls normalerweise nur geringe Signaländerungen auftreten. Eine störende Signaländerung kann daher auch bei relativ kleiner Amplitude sicher erfasst werden, ohne dass falsche Detektionen auftreten. Um falsche Detektionen bei einer relativ hohen Varianz des Eingangssignals zu vermeiden wird hingegen eine entsprechend höhere Ansprechschwelle gewählt.

Im dritten Detektormodul wird das Differenzsignal vorzugsweise entweder direkt oder über einen Signalbegrenzer, der die Amplitude des weitergeleiteten Signals limitiert, einem Integrator zugeführt, dessen Ausgangssignal in einem nachgeschalteten zweiten Schwellwertmodul betragsrichtig mit wenigstens einem Schwellwert verglichen wird. Im dritten Detektormodul können aufgrund der Integration des Differenzsignals daher kleine Laständerungen erfasst werden. Um kleine Laständerungen rasch erfassen zu können wird vorzugsweise die Zeit nach einem Nulldurchgang des Differenzsignals gemessen und ein entsprechender Zeitwert gebildet, der vorzugsweise potenziert, einen Gewichtungsfaktor bildet, mittels dessen das Differenzsignal multipliziert wird, bevor dieses dem Integrator zugeführt wird. Dies hat zur Folge, dass ein sehr kleiner, aber konstanter Offset aufgrund der Multiplikation mit dem vorzugsweise mit höherer Ordnung anwachsenden Gewichtungsfaktor rasch wirksam wird.

Der Integrator wird dabei derart gesteuert, dass dessen Ausgangssignal wächst, solange der Betrag des Differenzsignals um einen entsprechenden Wert von null abweicht, und anschliessend wieder fällt. Vorzugsweise wird ein zweiter Gewichtungsfaktor gebildet, der gleich eins ist, falls das Differenzsignal deutlich von null abweicht, und der kleiner als der Betrag von eins ist, falls das Differenzsignal nahe null ist. Dieser zweite Gewichtungsfaktor wird beispielsweise innerhalb der Integratorschlaufe einem Multiplikator zugeführt.

Vorzugsweise muss das Ausgangssignal des Integrators einen ersten höheren ersten Schwellwert überschreiten, bevor eine Laständerung signalisiert wird, und anschliessend einen tieferen zweiten Schwellwert wieder unterschreiten, bevor die Signalisierung der Laständerung wieder aufgehoben wird. Dadurch wird verhindert, dass das dritte Detektormodul eine vorliegende Laständerung nicht mehr anzeigt, während das erste Detektormodul diese Laständerung noch immer als Störung behandelt.

Zu beachten ist, dass nach der Signalisierung einer Laständerung das Messsignal wieder durchgeschaltet und somit das Ausgangssignal der Messwerteinheit und somit auch das Differenzsignal der Laständerung nachgeführt wird.

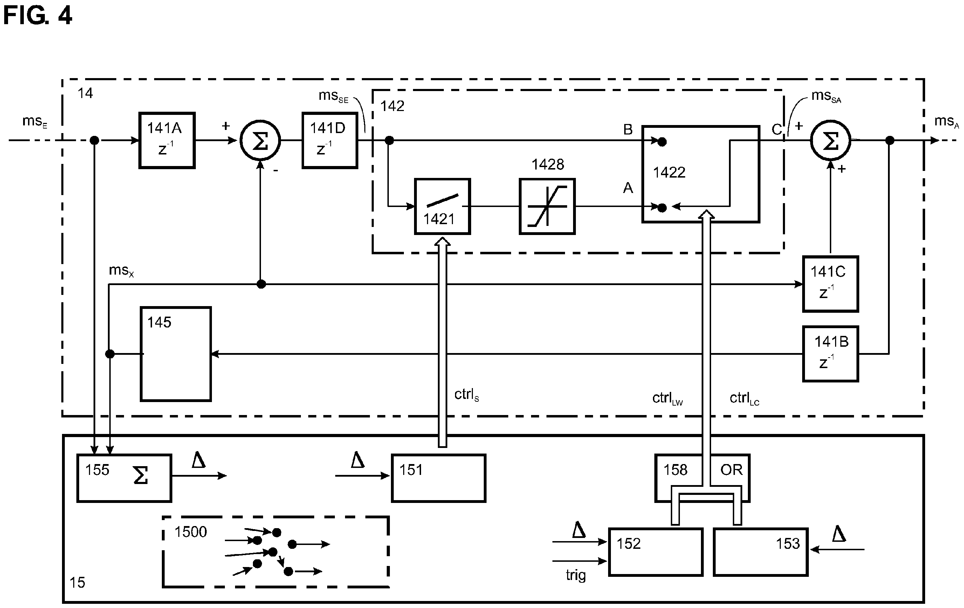

In einer weiteren vorzugsweisen Ausgestaltung der Erfindung wird wenigstens das Messsignal und/oder das Differenzsignal einem trainierten neuronalen Netzwerk zugeführt (siehe Figur 4, Modul 1500), welches feststellt, ob auftretende Signaländerungen durch eine Störung, durch einen Lastwechsel und/oder durch eine Laständerung verursacht wurden, wonach die Filterparameter und/oder die Schaltmittel entsprechend gesteuert werden. Neuronale Netze und Verfahren zum Trainieren derselben sind beispielsweise aus [9], US 5'960'391 bekannt.

Die Kraftmessvorrichtung kann beispielsweise im störungsfreien Betrieb trainiert werden, in dem nur kleine Laständerungen oder grössere Lastwechsel vorgenommen werden. Das neuronale Netz lernt daher das Verhalten der Wage bei verschiedenen Betriebszuständen und kann dann präzise entscheiden, ob eine Laständerung oder ein Lastwechsel oder eine Störung aufgetreten ist. Die Waage kann vom Anwender daher individuell trainiert werden, so dass sie sich den örtlichen Gegebenheiten, der Konfiguration der Waage, dem individuellen Handling des Anwenders und dessen Prozessen optimal anpasst.

Vorzugsweise sind die Schaltmittel derart ausgestaltet, dass das dem Eingang der Schaltmittel zugeführte Messsignal über einen mit einem Schalter und einem Begrenzer versehenen ersten Signalpfad zu einem ersten Eingang und über einen zweiten Signalpfad direkt zu einem zweiten Eingang eines Umschalters geführt wird. Beim Fehlen äusserer Einwirkungen, wie Störungen, Lastwechsel und Laständerungen, bleibt der vom ersten Detektormodul gesteuerte Schalter geschlossen und der vom zweiten und/oder dritten Detektormodul gesteuerte Umschalter auf den ersten Eingang geschaltet, so dass das Messsignal über den ersten Signalpfad vom Eingang zum Ausgang der Schaltmittel gelangen kann.

Bei der Detektion einer Störung durch das erste Detektormodul öffnet dieses den Schalter und unterbricht den ersten Signalpfad solange bis die Störung abgeklungen ist. Der Begrenzer verhindert dabei, dass Störanteile das Schaltmodul durchlaufen, bevor der Schalter geöffnet wird. Vorzugsweise bleibt der Schalter noch während n-Taktzyklen geöffnet, nachdem bereits keine Störsignale mehr aufgetreten sind.

Bei der Detektion eines Lastwechsels oder einer Laständerung durch das zweite bzw. dritte Detektormodul schalten diese den Umschalter auf den zweiten Eingang um, so dass das Messsignal über den zweiten Signalpfad vom Eingang zum Ausgang der Schaltmittel gelangen und weiter verarbeitet werden kann.

Die Schaltmittel sind vorzugsweise innerhalb einer Filterkette, möglichst nahe an deren Eingang vorgesehen, so dass Störungen möglichst früh erfasst und vollständig beseitigt werden. Durch die Vorschaltung einer Filterstufe kann das Messsignal hingegen soweit konditioniert werden, dass dessen erfindungsgemässe Verarbeitung erleichtert wird.

Nachfolgend wird die Erfindung anhand von Zeichnungen näher erläutert. Dabei zeigt:
- Figur 1: das Blockschaltbild einer Waage 1, die einen Messumformer 10, ein variables analoges Filter 11, einen A/D-Wandler 12, eine Kette mit variablen digitalen Filtern 131, ..., 13n und nachgeschaltet eine Auswerteeinheit 16, beispielsweise einen Messprozessor aufweist;
- Figur 2: die Kette digitaler Filter 131, ..., 13n von Figur 1 mit einem darin vorgesehenen, von einer Steuereinheit 15 gesteuerten Schaltmodul 14, in dem Schaltmittel 142 vorgesehen sind, mittels derer das zugeführte Messsignal ms_{E} oder das Ausgangssignal ms_{X} einer Messwerteinheit 145, in der ein früherer Messwert, ein Mittelwert oder ein Erwartungswert des Messsignals ms_{E} gebildet wird, zu den nachgeschalteten Signalverarbeitungseinheiten durchschaltbar ist;
- Figur 3: das Blockschaltbild von Figur 2 mit einer ersten Additionsstufe 143A, in der aus dem Messsignal ms_{E} und dem Ausgangssignal ms_{X} der Messwerteinheit 145 ein Differenzsignal gebildet wird, das den Schaltmitteln 142 zugeführt und anschliessend in einer zweiten Additionsstufe 143B mit dem Ausgangssignal ms_{X} der Messwerteinheit 145 summiert wird;
- Figur 4: das Schaltmodul 14 von Figur 2 mit vorzugsweise ausgestalteten Schaltmitteln 142 und die Steuereinheit 15 mit einem vorteilhaft verwendbaren, optionalen neuronalen Netz 1500; und
- Figur 5: die mittels drei Detektormodulen 151, 152, 153 gesteuerten Schaltmittel 142 von Figur 4.

Figur 1 zeigt das Blockschaltbild einer Waage 1, die einen Messumformer 10 aufweist, der ein zu einer Last korrespondierendes analoges Messsignal ms über ein variables analoges Filter 11 an einen Analog/Digital-Wandler 12 abgibt, welcher das digitalisierte Messsignal ms_{D} an eine Kette mit variablen digitalen Filtern 131, ..., 13n abgibt, von der das gefilterte digitale Messsignal ms_{DF} an eine vorzugsweise mit einem Prozessor versehene Ausgabeeinheit 16 abgegeben wird, von der die Messresultate ausgegeben, beispielsweise angezeigt werden.

Die an den Eingängen der Filtereinheiten 11, 13 anliegenden Signale werden zu Schwellwertmodulen 151, 151₁, ..., 151n in einer Steuereinheit 15 übertragen, welche das Auftreten von Laständerungen detektieren und Generatormodule 155, 155₁, ..., 155n betätigen, die nach der Detektion eines Lastwechsels einen Filterparameter r einer zugeordneten Filtereinheit 11, 13₁, ..., 13n zurücksetzen und in Funktion der Zeit gegen einen vorgegebenen Endwert x verändern.

Mit der Schaltung von Figur 1 ist es somit möglich, analoge und/oder digitale Filter 11, 13, beispielsweise nach Auftreten eines Lastwechsels, vorteilhaft zu steuern. In der analogen Signalverarbeitungseinheit werden vorzugsweise aktive Filter 11 mit einstellbaren Filterparametern verwendet, wie sie in [8], Kapitel 13, Seiten 888 bis 893 beschrieben sind. Die elektronische Steuerung der Filterparameter ist auf Seite 891 beschrieben. In der digitalen Signalverarbeitungseinheit werden digitale Filter 13 mit einstellbaren Filterparametern verwendet, wie sie in [8], Kapitel 21 beschrieben sind. Selbstverständlich ist die Steuerung der Filterparameter bei dieser Lösung einfacher realisierbar, indem beispielsweise der Filterparameter in einem Register des verwendeten Signalprozessors schrittweise geändert wird.

Gemäss [8], Seite 1133 geht man mehr und mehr dazu über, die Signalverarbeitung nicht analog, sondern digital durchzuführen. Die Vorteile liegen gemäss [8] in der höheren Genauigkeit und Reproduzierbarkeit sowie in der geringeren Störempfindlichkeit. Aufbau, Arbeitsweise und Eigenschaften digitaler Filter sind in [8], Kapitel 21 beschrieben. Elektronische Waagen mit digitalen Filtern sind beispielsweise aus [6] und [7] bekannt. Die Realisierung von digitalen Filtern mittels eines Signalprozessors ist in [8], Kapitel 21.7.2, Seiten 1181-1184 beschrieben.

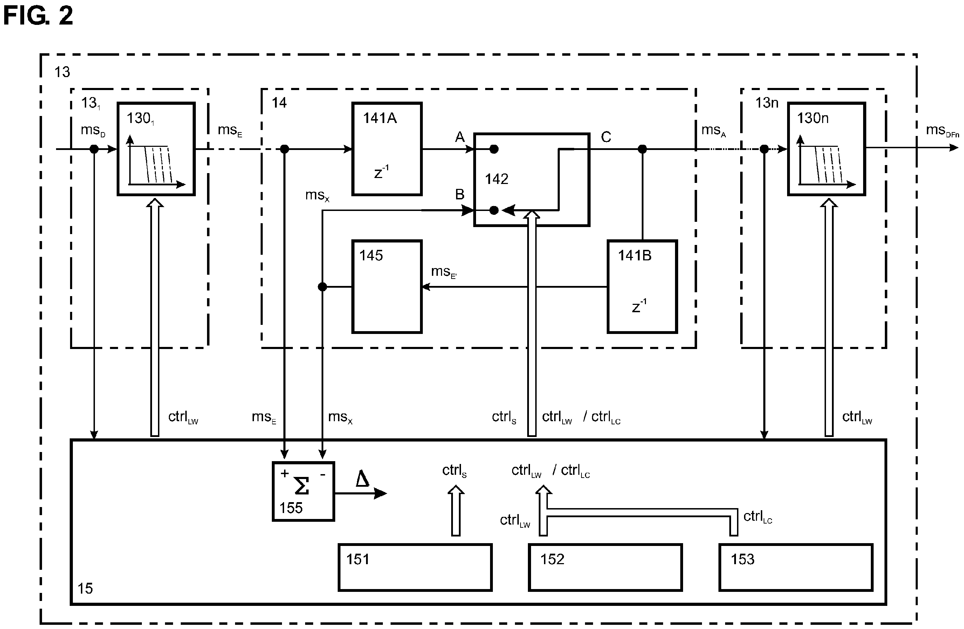

Sofern ein Signalprozessor verwendet wird, bildet dieser im Wesentlichen selbst die digitale Signalverarbeitungseinheit 13 einschliesslich des darin vorgesehenen Schaltmoduls 14 (siehe die Figuren 2-4). Die Signalverarbeitungsmodule basieren daher vorzugsweise auf implementierten Softwaremodulen.

Die in Figur 1 gezeigte Schaltungsanordnungen mit variablen Filtern 11, 13 weist gegenüber Schaltungen mit nicht-variablen Filtern deutliche Vorteile auf.

Bei beiden Schaltungsarten, d.h. Schaltungsanordnungen mit variablen Filtern und Schaltungsanordnungen mit nicht-variablen Filtern, verursachen Störungen, insbesondere lastunabhängige Störungen, nach wie vor wesentliche Probleme. Obwohl diese Störungen durch die verwendeten Filter bereits gut unterdrückt werden, belasten diese kleineren oder grösseren Störungen die Signalverarbeitung, da Anteile dieser Störungen, insbesondere bei der Verwendung rekursiver Filter über eine lange Zeit im Signalverarbeitungspfad erhalten bleiben und somit verhindern, dass hochpräzise Messresultate rasch erzielt werden.

Die nachstehend beschriebene Erfindung dient daher dazu, diese Probleme sowohl bei Schaltungsanordnungen mit variablen Filtern, als auch bei Schaltungsanordnungen mit nicht-variablen Filtern zu beseitigen. Dazu wird vorzugsweise innerhalb oder vor einer Filterkette ein Schaltmodul 14 vorgesehen, wie es nachstehend beschrieben ist.

Anhand des in Figur 2 gezeigten Schaltmoduls 14 werden störende Signalanteile ausgeblendet und durch das Ausgangssignal ms_{X} einer Messwerteinheit 145 ersetzt, an deren Ausgang
- der verzögert zugeführte Wert des Messsignals ms_{E'} gehalten, oder
- ein Mittelwert aus den letzen innerhalb eines Zeitintervalls aufgetretenen Werten des Messsignals ms_{E} gebildet, oder
- ein Erwartungswert des Messsignals ms_{E} anhand der letzen innerhalb eines Zeitintervalls aufgetretenen Werte des Messsignals ms gebildet wird.

Ein Erwartungswert kann beispielsweise mittels einer bekannten LPC- (Linear Prediction Coding) Methode ermittelt werden, also einer mathematischen Methode, bei der zukünftige Werte des Messsignals anhand bereits registrierter Werte des Messsignals ms_{E} geschätzt werden.

Mittels eines in einer Steuereinheit 15 vorgesehenen ersten Detektormoduls 151 wird das Messsignal ms_{E} hinsichtlich des Auftretens von Störsignalen überwacht, wobei nach Detektion eines Störsignals Schaltmittel 142 derart betätigt werden, dass anstelle des zugeführten Messsignals ms_{E} das Ausgangssignal ms_{X} der Messwerteinheit 145 zur nachgeschalteten Filterstufe 13₍₎ geführt wird.

Im Ausführungsbeispiel gemäss Figur 2 ist die Schaltung wie folgt aufgebaut. Das von einer vorgeschalteten Filterstufe 13₁ abgegebene Messsignal ms_{E} wird über ein erstes Verzögerungsglied einem ersten Eingang A eines Umschalters 142 zugeführt, und, sofern keine Störungen aufgetreten sind, zum Ausgang C durchgeschaltet und dort einerseits an die nächste Filterstufe 13₍₎ und andererseits über ein zweites Verzögerungsglied 141B an die Messwerteinheit 145 abgegeben, die vorzugsweise einen Erwartungswert ms_{X} für das Messsignal ms_{E} einerseits an den zweiten Eingang B des Umschalters 142 und andererseits an die Steuereinheit 15 abgibt.

In der Steuereinheit 15 ist eine Additionsstufe 155 vorgesehen, in der aus dem Messsignal ms_{E} und dem Ausgangssignal ms_{X} der Messwerteinheit 145 ein Differenzsignal Δ gebildet wird.

Sofern die von der Waage 1 gemessene Last konstant ist und keine Störungen auftreten, ist das Differenzsignal Δ gleich null. Beim Auftreten von Störungen, Lastwechseln oder Laständerungen weicht das Differenzsignal Δ aufgrund der Verzögerungsglieder 141A und 141B von null ab. Sofern der Betrag des Differenzsignals Δ einen im ersten Detektionsmodul 151 vorgesehen Schwellwert überschreitet, wird eine Störung erkannt und der Umschalter 142, wie in Figur 2 gezeigt, auf den zweiten Eingang B umgeschaltet. Anstelle des gestörten Messsignals ms_{E} wird daher das Ausgangssignal ms_{X} der Messwerteinheit 145 zur nachgeschalteten Filtereinheit 13 geführt, so dass die Störung keine fehlerhaften Messwerte verursacht.

Nach dem Feststellen der Störung bzw. der Abweichung des Differenzsignals Δ von null, sind im Wesentlichen die folgenden Zustandsänderungen möglich. Sofern eine Störung aufgetreten ist, beispielsweise durch einen mechanischen Stoss oder Schlag, wird diese rasch abklingen, so dass das Differenzsignal Δ wieder null wird und der Umschalter 142 wieder zurück auf den ersten Eingang A gesetzt werden kann.

Alternativ kann ein permanenter Offset auftreten, der anzeigt, dass anstelle einer Störung eine Laständerung aufgetreten ist. Möglich ist ferner, dass anstelle einer Störung ein Lastwechsel aufgetreten ist. In diesen Fällen soll das Messsignal ms_{E} möglichst rasch wieder in den nächsten Filterstufen 13₍₎ weiterverarbeitet werden, damit das Ausgangssignal der Kraftmessvorrichtung 1 der Laständerung oder dem Lastwechsel unverzüglich folgt. Zu beachten ist, dass nach dem Zurückschalten des Umschalters 142 der Messwerteinheit 145 wieder aktuelle Messsignale ms_{E} zugeführt werden, so dass deren Ausgangssignal msx wieder aktualisiert und das Differenzsignal Δ somit gegen null geführt wird, wodurch auch im ersten Detektormodul 151 keine Störung mehr detektiert wird.

Dem Umschalter 142 wird somit das Steuersignal ctrl_{S} vom ersten Detektormodul 151 zugeführt, um diesen bei Detektion einer Störung auf den zweiten Eingang B umzuschalten. Ferner werden dem Umschalter 142, vorzugsweise über ein ODER-Tor 158 (siehe Figur 4), das Steuersignal ctrl_{LW} vom zweiten Detektormodul 152, das einen Lastwechsel anzeigt, und das Steuersignal ctrl_{LC} vom dritten Detektormodul 153, das eine Laständerung anzeigt, zugeführt, um den Umschalter 142 wieder auf den ersten Eingang A zurückzusetzen. Die Steuersignale ctrl_{LW} und ctrl_{LC} vom zweiten und dritten Detektormodul 152, 153 haben dabei eine höhere Priorität als das Steuersignal ctrl_{S} vom ersten Detektormodul 151.

Von besonderer Bedeutung in der Schaltungsanordnung von Figur 2 ist das erste Verzögerungsglied 141A, welches das zugeführte Messsignals ms_{E} mit einer Verzögerungszeit zum Umschalter 142 weiterführt, die derart bemessen ist, dass der Umschalter 142 beim Auftreten einer Störung umgeschaltet werden kann, bevor die Störung diesen durchlaufen hat und das Ausgangssignal der Kraftmessvorrichtung 1 beeinflusst.

Zu beachten ist ferner, dass der Umschalter 142 nur symbolisch gezeigt ist, um die erfindungsgemässe Lösung zu erläutern. In der Praxis kann der Umschalter 142 bzw. das Schaltmittel 142 beliebig ausgestaltet sein. Es versteht sich auch, dass die erfindungsgemässe Lösung mittels Hardware oder Software oder Kombinationen davon realisiert werden kann.

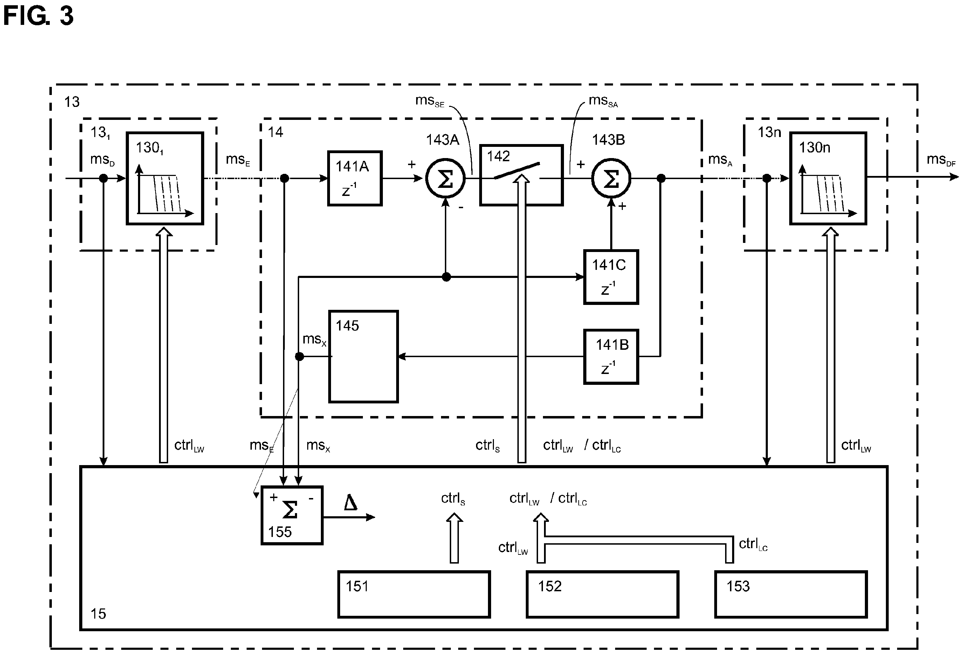

Eine besonders vorteilhafte Ausgestaltung des Schaltmoduls 14 ist in Figur 3 gezeigt. Darin wird das Messsignal ms_{E} über das erste Verzögerungsglied 141A, eine erste Additionsstufe 143A, den Schalter 142 und eine zweite Additionsstufe 143B zum Ausgang des Schaltmoduls 14 geführt. In der ersten Additionsstufe 143A wird das Ausgangssignal ms_{X} der Messwerteinheit 145 vom Messsignal ms_{E} subtrahiert, so dass am Eingang des Schalters 142 das Messsignal ms_{SE} ansteht, welches dem Differenzsignal Δ entspricht, das bei konstanter Last gleich null ist. In der zweiten Additionsstufe 143A wird das Ausgangssignal msx der Messwerteinheit 145 zum zugeführten Messsignal ms_{SE} bzw. zum Differenzsignal Δ wieder addiert. Dadurch wird von der zweiten Additionsstufe bei geschlossenen Schaltmitteln das zugeführte Messsignal ms_{E} und bei geöffneten Schaltmitteln das Ausgangssignal ms_{X} der Messwerteinheit abgegeben und dem nachgeschalteten Signalverarbeitungspfad zugeführt. Durch einfaches Betätigen des Schalters 142 wird das Ausgangssignal ms_{A} des Schaltmoduls 14 somit zwischen dem Messsignal ms_{E} und dem Ausgangssignal ms_{X} der Messwerteinheit 145 umgeschaltet.

Figur 4 zeigt eine vorteilhafte Ausgestaltung des Schalters bzw. der Schaltmittel 142. Darin wird das dem Eingang der Schaltmittel 142 zugeführte Messsignal ms_{SE} über einen mit einem Schalter 1421 und einem Begrenzer 1428 versehenen ersten Signalpfad zu einem ersten Eingang A und über einen zweiten Signalpfad direkt zu einem zweiten Eingang B eines Umschalters 1422 geführt.

Beim Fehlen äusserer Einwirkungen, wie Störungen, Lastwechsel und Laständerungen, ist der vom ersten Detektormodul 151 gesteuerte Schalter 1421 geschlossen und der vom zweiten und/oder dritten Detektormodul 152, 153 über das ODER-Tor 158 gesteuerte Umschalter 1422 auf den ersten Eingang A geschaltet.

Bei der Detektion einer Störung durch das erste Detektormodul 151, wird der Schalter 1421 vom Detektormodul 151 geöffnet und nach dem Abklingen der Störung, vorzugsweise erst nach n-Taktzyklen wieder geschlossen. Der Begrenzer 1428 im ersten Signalpfad verhindert dabei, dass Störungen mit hoher Amplitude den ersten Signalpfad durchlaufen können, bevor der Schalter 1421 betätigt wird.

Bei der Detektion eines Lastwechsels und/oder einer Laständerung durch das zweite und/oder dritte Detektormodul 152, 153 schalten diese den Umschalter 1422 auf den zweiten Eingang B um und vorzugsweise erst nach der Stabilisierung des Messsystems wieder zurück.

Oben wurde bereits beschrieben, dass bei der Detektion eines Lastwechsels die Parameter der Filtereinheiten 11, 13 vorzugsweise derart gesteuert werden, dass möglichst kurze Einschwingvorgänge erzielt werden.

Bei der Detektion eines Lastwechsels ist es ferner möglich, dass anstelle des sich ändernden Ausgangssignals ms_{DF} der Filterkette 13
- der vor dem Lastwechsel ermittelte letzte Wert des Ausgangssignals ms_{DF} der Filterkette 13, oder
- ein Mittelwert aus den letzen innerhalb eines Zeitintervalls aufgetretenen Werten des Ausgangssignals ms_{DF} der Filterkette 13 gebildet, oder
- ein Erwartungswert des Ausgangssignals ms_{DF} der Filterkette 13 anhand der letzen innerhalb eines Zeitintervalls aufgetretenen Werte des Ausgangssignals ms_{DF} gebildet
und zum Ausgang der Kraftmessvorrichtung 1 durchgeschaltet wird, bis der Einschwingvorgang abgeschlossen ist.

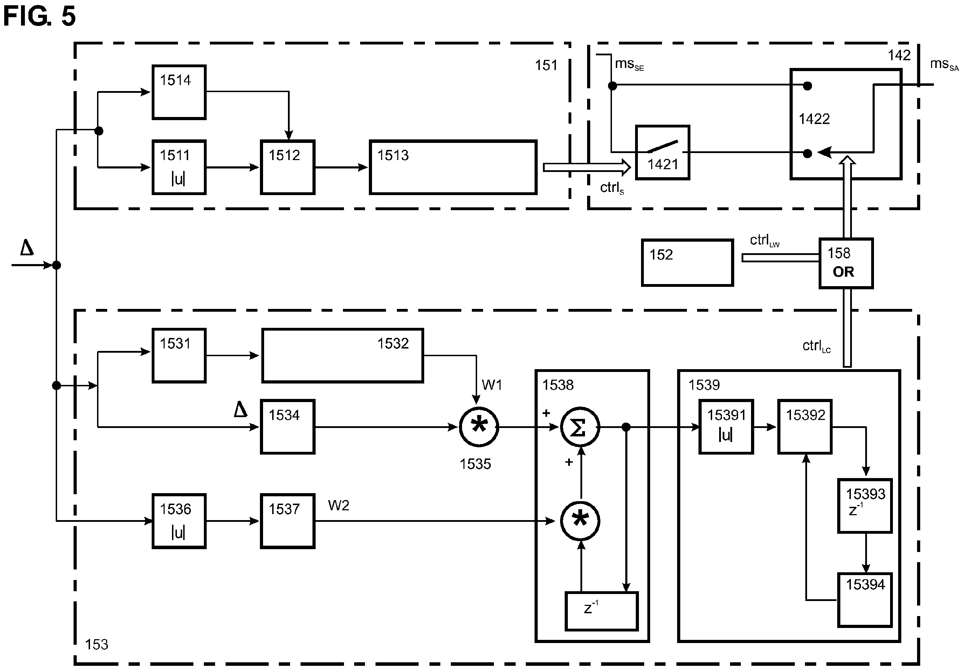

Figur 5 zeigt die mittels der drei Detektormodulen 151, 152, 153 gesteuerten Schaltmittel 142 von Figur 4.

Das erste Detektormodul 151, das der Detektion von Störungen dient, weist ein Betragsmodul 1511 auf, in dem der Betrag des zugeführten Differenzsignals Δ ermittelt und zu einer nachgeschalteten Schwellwertschaltung 1512 übertragen wird, in der festgestellt wird, ob der Betrag des Differenzsignals Δ einen vorgesehenen Schwellwert überschreitet. Sobald der Schwellwert überschritten wird, wird der Schalter 1421 mittels eines von einer Überwachungseinheit 1513 abgegebenen Steuersignals ctrl_{S} geöffnet. Der Schalter 1421 wird erst dann wieder geschlossen, wenn die Überwachungseinheit 1513 festgestellt hat, dass der Schwellwert während n-Taktzyklen nicht mehr überschritten wurde. Dadurch wird ein rasches und störendes Umschalten des Schalters 1421 vermieden, das auftreten könnte, wenn der Betrag des Differenzsignals Δ nahe dem Schwellwert liegt.

In der gezeigten vorzugsweisen Ausgestaltung des ersten Detektormoduls 151 ist ferner ein Statistikmodul 1514 vorgesehen, welches die Varianz des Differenzsignals Δ misst und die Höhe des Schwellwerts im Schwellwertmodul 1512 steuert. Sofern eine hohe Varianz vorliegt, wird ein höherer Schwellwert gewählt, damit falsche Störungsmeldungen vermieden werden. Sofern eine tiefe Varianz vorliegt, wird ein niedrigerer Schwellwert gewählt, damit kleinere Störungen korrekt erfasst werden können.

Im dritten Detektormodul 153 wird das Differenzsignal Δ entweder direkt oder über einen Begrenzer 1534 einem Integrator 1538 zugeführt, dessen Ausgangssignal in einer Schwellwertschaltung 1539 betragsrichtig (im Modul 15391 wird der Betrag des Ausgangssignals gebildet) mit wenigstens einem in einem Schwellwertmodul 15392 vorgesehenen Schwellwert verglichen wird. Das Überschreiten dieses Schwellwerts zeigt eine aufgetretene Laständerung an. Nach der Detektion einer Laständerung zeigt das Unterschreiten dieses ersten oder eines zweiten tieferen Schwellwerts an, dass das Messsystem der Laständerung gefolgt ist. Die Umschaltung zwischen den beiden Schwellwerten erfolgt mittels eines dem Schwellwertmodul 15392 nachgeschalteten Verzögerungsglied 15393 und einem Umschaltmodul 15394, welches den Schwellwert nach dessen Überschreiten auf den tieferen Wert heruntersetzt und der erst wieder den höheren Wert einstellt, wenn auch der tiefere Wert unterschritten wurde.

Zur raschen Detektion sehr kleiner Laständerungen wird im dritten Detektormodul 153 jeweils der Nulldurchgang des Differenzsignals Δ mittels eines Moduls 1531 erfasst. Bei jedem Nulldurchgang triggert dieses Modul 1531 einen nachgeschalteten Zähler 1532 der einen vom Nulldurchgang abhängigen Zählerwert erzeugt. Dieser Zählerwert z wird vorzugsweise potenziert (z, z² oder z³) als erster Gewichtungsfaktor W1 verwendet, mittels dessen das Differenzsignal Δ in einem Multiplikator 1535 gewichtet wird, bevor es dem Integrator 1538 zugeführt wird. Durch diese Gewichtung wird ein sehr kleiner und konstanter Offset bzw. ein sehr kleiner Anstieg des Differenzsignals Δ sehr rasch ebenso signifikant, wie ein viel grösserer Offset.

Zur Steuerung des Integrators 1538 wird ein zweiter Gewichtungsfaktor W2 verwendet. Dieser zweite Gewichtungsfaktor W2 wird gebildet, indem das Differenzsignal Δ in einem im dritten Detektormodul 153 vorgesehenen Schwellwertmodul 1537 betragsrichtig (das Modul 1536 bildet den Betrag des Differenzsignals Δ) mit wenigstens einem Schwellwert verglichen wird, um einen zweiten Gewichtungsfaktor W2 zu bilden, der innerhalb des Integrators 1538 bzw. der innerhalb der Integratorschlaufe einem Multiplikator zugeführt wird, um das dort bearbeitete Signal schrittweise zu vergrössern oder zu reduzieren, falls das Differenzsignal Δ etwa gleich null ist. Der Integrator 1538 wird daher bei grösseren und auch sehr kleinen Laständerungen rasch hochgefahren und nach dem Ausgleich der Laständerungen (Differenzsignal Δ --> 0) wieder herunter gefahren.

Das erfindungsgemässe Verfahren und die erfindungsgemässe Kraftmessvorrichtung 1 wurden in bevorzugten Ausgestaltungen beschrieben und dargestellt. Die Kraftmessvorrichtung wurde in der Ausgestaltung einer Waage 1 beschrieben. Die Erfindung ist jedoch auch bei anderen Kraftmessvorrichtungen, wie gravimetrischen Messgeräten, Wägemodulen, Lastzellen und Kraftsensoren, die gegebenenfalls Teil einer Waage bilden können, einsetzbar.

Ferner wurde aufgezeigt, dass die Erfindungsidee in Kombination mit verschiedenen Technologien, wie Analogtechnik oder Digitaltechnik anwendbar oder als Softwarelösung in Verbindung mit einem Signalprozessor realisierbar ist.

Ferner ist die Erfindung natürlich nicht auf die vorgestellten Filter und Schaltmittel beschränkt.

### Literaturverzeichnis

[1] Bauen Sie Ihre Qualität auf solidem Grund!, Firmenbrochure, Mettler-Toledo GmbH, Januar 2001
[2] Wägefibel, Mettler-Toledo GmbH, April 2001
[3] CH 673 529 A5
[4] DE 10024986 A1
[5] US 5,665,941
[6] US 2004/0088342 A1
[7] US 6,271,484 B1
[8] U. Tietze, Ch. Schenk, Halbleiterschaltungstechnik, 11. Auflage, 1. Nachdruck, Springer Verlag, Berlin 1999
[9] US 5'960'391

## Patentansprüche

1. Verfahren zur Verarbeitung des Ausgangssignals eines in einer Kraftmessvorrichtung (1), insbesondere einer Waage, vorgesehenen Messumformers (10), durch den ein einer einwirkenden Last entsprechendes Messsignal (ms) gebildet wird, das in einem analogen Filter (11) und/oder, nach Verarbeitung in einem Analog/Digital-Wandler (12), in einem digitalen Filter (13₁,...,13ₙ) gefiltert wird, um durch äussere Einwirkungen, wie mechanische Störungen, Lastwechsel und Laständerungen verursachte störende Signalanteile zu unterdrücken, **dadurch gekennzeichnet, dass** das gefilterte Messsignal (ms_{E}) einem ersten Verzögerungsglied (141A) mit einer festgesetzten Verzögerungszeit zugeführt wird, mittels dem an dessen Ausgang ein verzögertes und gefiltertes Messsignal (mS_{A}) abgegeben wird, das einem Schaltmittel (142) zugeführt wird, wobei die festgesetzte Verzögerungszeit die Umschaltzeit des Schaltmittels (142) überschreitet, und dass das gefilterte und verzögerte Messsignal (ms_{A}) einer Messwerteinheit (145) zugeführt wird, mittels der an deren Ausgang
- der verzögert zugeführte und gehaltene Wert des gefilterten und verzögerten Messsignals (mS_{A}) oder
- ein aus den letzten innerhalb eines Zeitintervalls aufgetretenen Werten des gefilterten und verzögerten Messsignals (ms_{A}) gebildeter Mittelwert, oder
- ein anhand der letzten innerhalb eines Zeitintervalls aufgetretenen Werte des Messsignals (ms) gebildeter Erwartungswert des gefilterten und verzögerten Messsignals (ms_{A}) abgegeben wird und dass das gefilterte Messsignal (ms_{E}) mittels eines in einer Steuereinheit (15) vorgesehenen ersten Detektormoduls (151) hinsichtlich des Auftretens von Störsignalen überwacht wird, wobei nach Detektion eines Störsignals das Schaltmittel (142) derart betätigt wird, dass die Zufuhr des gefilterten und verzögerten Messsignals (ms_{A}) zur Messwerteinheit (145) unterbrochen wird und anstelle des gefilterten und verzögerten Messsignals (ms_{A}) das Ausgangssignal (ms_{X}) der Messwerteinheit (145) zu den nachgeschalteten Modulen der Kraftmessvorrichtung (1) geführt wird.

2. Verfahren nach Anspruch 1, **dadurch gekennzeichnet, dass** die Ausgabe des Ausgangssignals am Ausgang der Messwerteinheit (145) verzögert erfolgt, indem das gefilterete Messsignal (ms_{E}) der Messwerteinheit (145) über wenigstens das erste Verzögerungsglied (141A) zugeführt oder das Ausgangssignal der Messwerteinheit (145) über wenigstens das erste Verzögerungsglied (141A) abgegeben wird, oder indem die Verzögerung innerhalb der Messwerteinheit (145) gegebenenfalls mittels der zur Bildung des Mittelwerts oder des Erwartungswerts vorgesehenen Prozesse realisiert wird.

3. Verfahren nach Anspruch 1 oder 2, **dadurch gekennzeichnet, dass** das gefilterte Messsignal (ms_{E}) vorzugsweise über das erste Verzögerungsglied (141A) und eine erste Additionsstufe (143A), in der das Ausgangssignal (msx) der Messwerteinheit (145) vom gefilterten Messsignal (ms_{E}) subtrahiert wird, sowie über die Schaltmittel (142) einer zweiten Additionsstufe (143B) zugeführt wird, in der das Ausgangssignal (ms_{X}) der Messwerteinheit (145) zum zugeführten Signal wieder addiert wird, so dass von der zweiten Additionsstufe (143B) bei geschlossenen Schaltmitteln (142) das zugeführte Messsignal (ms_{A} = ms_{E} - ms_{X} + ms_{X}) und bei geöffneten Schaltmitteln (142) das Ausgangssignal (ms_{A} = 0 + ms_{X}) der Messwerteinheit (145) abgegeben und zum Ausgang der Kraftmessvorrichtung (1) geführt wird.

4. Verfahren nach Anspruch 1, 2 oder 3, **dadurch gekennzeichnet, dass** das gefilterte Messsignal (ms_{E}) mittels eines in einer Steuereinheit (15) vorgesehenen zweiten Detektormoduls (152) hinsichtlich des Auftretens von Lastwechseln und/oder mittels eines dritten Detektormoduls (153) hinsichtlich des Auftretens von Laständerungen überwacht wird, wonach bei Auftreten von Lastwechseln und/oder Laständerungen die Schaltmittel (142) derart betätigt werden, dass das gefilterte und verzögerte Messsignal (ms_{E}) die Schaltmittel (142) bis zu deren Ausgang durchläuft (ms_{A} = ms_{E}).

5. Verfahren nach Anspruch 1, 2, 3 oder 4, **dadurch gekennzeichnet, dass** das gefilterte Messsignal (ms_{E}) und das demgegenüber mittels des ersten und/oder eines zweiten Verzögerungsglieds (141A, 141B) zeitlich verzögerte Ausgangssignal (ms_{X}) der Messwerteinheit (145) in der Steuereinheit (15) einer Additionsstufe (155) zugeführt werden, welche daraus ein Differenzsignal (Δ) bildet, das
- im ersten Detektormodul (151), in einem ersten Schwellwertmodul (1512) betragsrichtig mit einem festen oder variablen Schwellwert verglichen wird, um Störungen zu detektieren; und/oder
- im zweiten Detektormodul (152) betragsrichtig mit einem festen oder variablen Schwellwert verglichen wird, um Lastwechsel zu detektieren; und/oder
- im dritten Detektormodul (153) entweder direkt oder über einen Begrenzer (1534) einem Integrator (1538) zugeführt wird, dessen Ausgangssignal in einer Schwellwertschaltung (1539) betragsrichtig mit wenigstens einem Schwellwert verglichen wird, dessen Überschreiten eine aufgetretene Laständerung und dessen nachfolgendes Unterschreiten den Ausgleich der Laständerung anzeigt.

6. Verfahren nach Anspruch 5, **dadurch gekennzeichnet, dass**
- im ersten Detektormodul (151) ein Statistikmodul (1524) vorgesehen ist, mittels dessen die Varianz des Differenzsignals (Δ) berechnet und davon abhängig der Schwellwert im ersten Schwellwertmodul (1512) festgelegt wird; und/oder
- im dritten Detektormodul (153) ein Nulldurchgang des Differenzsignals (Δ) mittels eines Moduls (1531) festgestellt und in einem nachgeschalteten Zähler (1532) ein vom Nulldurchgang abhängiger Zählerwert erzeugt wird, der vorzugsweise potenziert einen ersten Gewichtungsfaktor (W1) bildet, mittels dessen das Differenzsignal (Δ) in einem Multiplikator (1535) gewichtet wird, bevor es dem Integrator (1538) zugeführt wird; und/oder
- das Differenzsignal (Δ) in einem im dritten Detektormodul (153) vorgesehenen Schwellwertmodul (1537) betragsrichtig mit wenigstens einem Schwellwert verglichen wird, um einen zweiten Gewichtungsfaktor (W2) zu bilden, der zur Steuerung des Integrators (1538) verwendet wird, um dessen Ausgangssignal zurückzuführen, falls das Differenzsignal (Δ) etwa gleich null ist; und/oder
- das Ausgangssignal des Integrators (1538) in einer nachgeschalteten Schwellwerteinheit mit wenigstens einem höheren ersten Schwellwert verglichen wird, um eine Laständerung zu detektieren, und anschliessend mit einem tieferen zweiten Schwellwert verglichen wird, um festzustellen, dass die Kraftmessvorrichtung der Laständerung gefolgt ist.

7. Verfahren nach einem der Ansprüche 1-6, **dadurch gekennzeichnet, dass** wenigstens das gefilterte Messsignal (ms_{E}) und/oder das Differenzsignal (Δ) einem trainierten neuronalen Netzwerk (1500) zugeführt wird, welches feststellt, ob auftretende Signaländerungen durch eine gegebenenfalls mechanische Störung, durch einen Lastwechsel und/oder durch eine Laständerung verursacht wurden, wonach die Filterparameter und/oder die Schaltmittel (142) entsprechend gesteuert werden.

8. Verfahren nach einem der Ansprüche 1-7, **dadurch gekennzeichnet, dass** das dem Eingang der Schaltmittel (142) zugeführte gefilterte Messsignal (ms_{SE}) über einen mit einem Schalter (1421) und einem Begrenzer (1428) versehenen ersten Signalpfad zu einem ersten Eingang (A) und über einen zweiten Signalpfad direkt zu einem zweiten Eingang (B) eines Umschalters (1422) geführt wird, wobei
- beim Fehlen äusserer Einwirkungen, wie Störungen, Lastwechsel und Laständerungen, der vom ersten Detektormodul (151) gesteuerte Schalter (1421) geschlossen und der vom zweiten und/oder dritten Detektormodul (152, 153) gesteuerte Umschalter (1422) auf den ersten Eingang (A) geschaltet ist;
- bei der Detektion einer Störung durch das erste Detektormodul (151) dieses den Schalter (1421) öffnet und nach dem Abklingen der Störung den Schalter (1421) vorzugsweise erst nach n-Taktzyklen wieder schliesst; und
- bei der Detektion eines Lastwechsels oder einer Laständerung durch das zweite bzw. dritte Detektormodul (152, 153) diese den Umschalter (1422) auf den zweiten Eingang (B) umschaltet und vorzugsweise erst nach der Stabilisierung des Messsystems wieder zurückschaltet.

9. Verfahren nach einem der Ansprüche 1 bis 8, **dadurch gekennzeichnet, dass** das Messsignal (ms_{E}) in einer digitalen und/oder analogen Filterstufe (11, 13) gefiltert wird, bevor es den Schaltmitteln (142) zugeführt wird und/oder dass das von den Schaltmitteln (142) abgegebene Messsignal (ms_{SA}) in einer digitalen und/oder analogen Filterstufe (11, 13) gefiltert wird, bevor es zum Ausgang der Kraftmessvorrichtung (1), gegebenenfalls zu einem Prozessor oder zu einer Anzeigeeinheit (16) geführt wird.

10. Kraftmessvorrichtung (1), insbesondere Waage (1), geeignet zur Durchführung des Verfahrens nach einem der Ansprüche 1 bis 9, mit einem Messumformer (10), durch den ein einer einwirkenden Last entsprechendes Messsignal (ms) gebildet wird, das in einem analogen Filter (11) und/oder, nach Verarbeitung in einem Analog/Digital-Wandler (12), in einem digitalen Filter (13₁, ..., 13n), filterbar ist, um durch äussere Einwirkungen, wie mechanische Störungen, Lastwechsel und Laständerungen verursachte störende Signalanteile zu unterdrücken, **dadurch gekennzeichnet, dass** das Messsignal eines ersten Verzögerungsglieds (141A) mit einer festgesetzten Verzögerungszeit zuführbar ist, mittels dem an dessen Ausgang ein verzögertes aber störungsfreies Messsignal abgebbar ist, das einem Schaltmittel (142) zuführbar ist, wobei die festgesetzte Verzögerungszeit die Umschaltzeit des Schaltmittels (142) überschreitet, und dass das gefilterte und verzögerte Messsignal (ms_{A}) einer Messwerteinheit (145) zuführbar ist, mittels der an deren Ausgang
- der verzögert zugeführte und gehaltene Wert des gefilterten und verzögerten Messsignals (ms_{A}), oder
- ein aus den letzten innerhalb eines Zeitintervalls aufgetretenen Werten des gefilterten und verzögerten Messsignals (ms_{A}) gebildeter Mittelwert, oder
- ein anhand der letzten innerhalb eines Zeitintervalls aufgetretenen Werte des Messsignals (ms) gebildeter Erwartungswert des gefilterten und verzögerten Messsignals (ms_{A}) abgebbar ist und dass das gefilterte Messsignal (ms_{E}) mittels eines in einer Steuereinheit (15) vorgesehenen ersten Detektormoduls (151) hinsichtlich des Auftretens von Störsignalen überwachbar ist, wobei nach Detektion eines Störsignals Schaltmittel (142) derart betätigbar sind, dass die Zufuhr des gefilterten und verzögerten Messsignals (ms_{A}) zur Messwerteinheit (145) unterbrechbar und anstelle des gefilterten und verzögerten Messsignals (ms_{A}) das Ausgangssignal (ms_{X}) der Messwerteinheit (145) den nachgeschalteten Modulen der Kraftmessvorrichtung (1) zuführbar ist.

11. Kraftmessvorrichtung (1) nach Anspruch 10, **dadurch gekennzeichnet, dass** das gefilterte Messsignal (ms_{E}) der Messwerteinheit (145) über wenigstens ein erstes Verzögerungsglied (141A) zuführbar oder das Ausgangssignal der Messwerteinheit (145) über wenigstens ein erstes Verzögerungsglied (141A) abgebbar ist oder dass eine verzögerte Abgabe des Ausgangssignals innerhalb der Messwerteinheit (145) gegebenenfalls mittels der zur Bildung des Mittelwerts oder des Erwartungswerts vorgesehenen Prozesse realisiert ist.

12. Kraftmessvorrichtung (1) nach Anspruch 10 oder 11, **dadurch gekennzeichnet, dass** das gefilterte Messsignal (ms_{E}) vorzugsweise über das erste Verzögerungsglied (141A) und eine erste Additionsstufe (143A), in der das Ausgangssignal (ms_{X}) der Messwerteinheit (145) vom Messsignal gefilterten (ms_{E}) subtrahierbar ist, sowie über die Schaltmittel (142) einer zweiten Additionsstufe (143B) zuführbar ist, in der das Ausgangssignal (ms_{X}) der Messwerteinheit (145) zum zugeführten Signal wieder addierbar ist, so dass von der zweiten Additionsstufe (143B) bei geschlossenen Schaltmitteln (142) das zugeführte Messsignal (ms_{A} = ms_{E} - ms_{X} + ms_{X}) und bei geöffneten Schaltmitteln (142) das Ausgangssignal (ms_{A} = 0 + ms_{X}) der Messwerteinheit (145) abgebbar und zum Ausgang der Kraftmessvorrichtung (1) führbar ist.

13. Kraftmessvorrichtung (1) nach Anspruch 10, 11 oder 12, **dadurch gekennzeichnet, dass** das gefilterte Messsignal (ms_{E}) mittels eines in einer Steuereinheit (15) vorgesehenen zweiten Detektormoduls (152) hinsichtlich des Auftretens von Lastwechseln und/oder mittels eines dritten Detektormoduls (153) hinsichtlich des Auftretens von Laständerungen überwachbar ist, mittels derer bei Auftreten von Lastwechseln und/oder Laständerungen die Schaltmittel (142) derart betätigbar sind, dass das gefilterte Messsignal (ms_{E}) die Schaltmittel (142) bis zu deren Ausgang durchläuft (ms_{A} = ms_{E}).

14. Kraftmessvorrichtung (1) nach Anspruch 10, 11, 12 oder 13, **dadurch gekennzeichnet, dass** das gefilterte Messsignal (ms_{E}) und das demgegenüber mittels des ersten und/oder eines zweiten Verzögerungsglieds (141A, 141B) zeitlich verzögerte Ausgangssignal (ms_{X}) der Messwerteinheit (145) in der Steuereinheit (15) einer Additionsstufe (155) zuführbar ist, mittels der daraus ein Differenzsignal (Δ) erzeugbar ist, das
- im ersten Detektormodul (151), in einem ersten Schwellwertmodul (1512) betragsrichtig mit einem festen oder variablen Schwellwert vergleichbar ist, um Störungen zu detektieren; und/oder
- im zweiten Detektormodul (152) betragsrichtig mit einem festen oder variablen Schwellwert vergleichbar ist, um Lastwechsel zu detektieren; und/oder
- im dritten Detektormodul (153) entweder direkt oder über einen Begrenzer (1534) einem Integrator (1538) zuführbar ist, dessen Ausgangssignal in einer Schwellwertschaltung (1539) betragsrichtig mit wenigstens einem Schwellwert vergleichbar ist, dessen Überschreiten eine aufgetretene Laständerung und dessen nachfolgendes Unterschreiten den Ausgleich der Laständerung anzeigt.

15. Kraftmessvorrichtung (1) nach Anspruch 14, **dadurch gekennzeichnet, dass**
- im ersten Detektormodul (151) ein Statistikmodul (1524) vorgesehen ist, mittels dessen die Varianz des Differenzsignals (Δ) berechenbar und davon abhängig der Schwellwert im ersten Schwellwertmodul (1512) festlegbar ist; und/oder
- im dritten Detektormodul (153) ein Nulldurchgang des Differenzsignals (Δ) mittels eines Moduls (1531) feststellbar und in einem nachgeschalteten Zähler (1532) ein vom Nulldurchgang abhängiger Zählerwert erzeugbar ist, der vorzugsweise potenziert einen ersten Gewichtungsfaktor (W1) bildet, mittels dessen das Differenzsignal (Δ) in einem Multiplikator (1535) gewichtet wird, bevor es dem Integrator (1538) zugeführt wird; und/oder
- das Differenzsignal (Δ) in einem im dritten Detektormodul (153) vorgesehenen Schwellwertmodul (1537) betragsrichtig mit wenigstens einem Schwellwert vergleichbar ist, um einen zweiten Gewichtungsfaktor (W2) zu bilden, der zur Steuerung des Integrators (1538) derart verwendbar ist, dass dessen Ausgangssignal zurückgeführt wird, falls das Differenzsignal (Δ) etwa gleich null ist; und/oder
- das Ausgangssignal des Integrators (1538) in einer nachgeschalteten Schwellwerteinheit mit wenigstens einem höheren ersten Schwellwert vergleichbar ist, um eine Laständerung zu detektieren, und nach Feststellen der Laständerung mit einem tieferen zweiten Schwellwert vergleichbar ist, um festzustellen, dass die Kraftmessvorrichtung der Laständerung gefolgt ist.

16. Kraftmessvorrichtung (1) nach einem der Ansprüche 10-15, **dadurch gekennzeichnet, dass** wenigstens das gefilterte Messsignal (ms_{E}) und/oder das Differenzsignal (Δ) einem trainierten neuronalen Netzwerk (1500) zuführbar ist, welches feststellt, ob auftretende Signaländerungen durch eine gegebenenfalls mechanische Störung, durch einen Lastwechsel und/oder durch eine Laständerung verursacht wurden, wonach die Filterparameter und/oder die Schaltmittel (142) entsprechend steuerbar sind.

17. Kraftmessvorrichtung (1) nach einem der Ansprüche 10-16, **dadurch gekennzeichnet, dass** das dem Eingang der Schaltmittel (142) zugeführte gefilterte Messsignal (ms_{SE}) über einen mit einem Schalter (1421) und einem Begrenzer (1428) versehenen ersten Signalpfad zu einem ersten Eingang (A) und über einen zweiten Signalpfad direkt zu einem zweiten Eingang (B) eines Umschalters (1422) führbar ist, wobei
- beim Fehlen äusserer Einwirkungen, wie Störungen, Lastwechsel und Laständerungen, der durch das erste Detektormodul (151) steuerbare Schalter (1421) geschlossen und der durch das zweite und/oder dritte Detektormodul (152, 153) steuerbare Umschalter (1422) auf den ersten Eingang (A) geschaltet ist;
- bei der Detektion einer Störung durch das erste Detektormodul (151) durch dieses der Schalter (1421) öffenbar und nach dem Abklingen der Störung der Schalter (1421) vorzugsweise erst nach n-Taktzyklen wieder schliessbar ist; und
- bei der Detektion eines Lastwechsels oder einer Laständerung durch das zweite bzw. dritte Detektormodul (152, 153) durch diese der Umschalter (1422) auf den zweiten Eingang (B) umschaltbar und vorzugsweise erst nach der Stabilisierung des Messsystems wieder zurückschaltbar ist.

18. Kraftmessvorrichtung (1) nach einem der Ansprüche 10 bis 17, **dadurch gekennzeichnet, dass** den Schaltmitteln (142) digitale und/oder analoge Filterstufen (11, 13) vor- oder nachgeschaltet sind.

## Claims

1. A method for processing the output signal of a transducer (10) provided in a force measuring device (1), in particular a scale, by which a measurement signal (ms) corresponding to an applied load is formed, which is filtered in an analogue filter (11) and/or, after processing in an analogue/digital converter (12), in a digital filter (13₁,...,13ₙ), in order to suppress interfering signal portions caused by external influences such as mechanical disturbances, load alternations and load changes, **characterized in that** the filtered measurement signal (ms_{E}) is supplied to a first delay element (141A) with a fixed delay time, by means of which, at the output thereof, a delayed and filtered measurement signal (mS_{A}) is output, which is supplied to a switching means (142), wherein the fixed delay time exceeds the switching time of the switching means (142), and **in that** the filtered and delayed measurement signal (ms_{A}) is supplied to a measuring unit (145), by means of which, at the output thereof,
- the value of measurement signal (mS_{A}) which has been supplied with delay and held, or
- an average value formed from the last values of the filtered and delayed measurement signal (ms_{A}) that occurred within a time interval, or
- an expected value of the filtered and delayed measurement signal (ms_{A}), which is formed based on the last values of the measurement signal (ms) that occurred within a time interval,
is output and **in that** the filtered measurement signal (ms_{E}) is monitored by means of a first detector module (151) provided in a control unit (15) for the occurrence of interfering signals, wherein, after detection of an interfering signal, the switching means (142) is actuated in such a manner that the supply of the filtered and delayed measurement signal (ms_{A}) to the measuring unit (145) is interrupted, and, instead of the filtered and delayed measurement signal (ms_{A}), the output signal (msₓ) of the measuring unit (145) is supplied to the downstream modules of the force measuring device (1).

2. The method according to Claim 1, **characterized in that** the output of the output signal at the output of the measuring unit (145) occurs with delay, **in that** the filtered measurement signal (ms_{E}) of the measuring unit (145) is supplied via at least the first delay element (141A), or the output signal of the measuring unit (145) is output via at least the first delay element (141A), or **in that** the delay within the measuring unit (145) is implemented optionally by means of the processes provided for the formation of the average value or of the expected value.

3. The method according to Claim 1 or 2, **characterized in that** the filtered measurement signal (ms_{E}) is preferably supplied via the first delay element (141A) and a first addition stage (143A), in which the output signal (msₓ) of the measuring unit (145) is subtracted from the filtered measurement signal (ms_{E}), as well as via the switching means (142) to a second addition stage (143B), in which the output signal (ms_{X}) of the measuring unit (145) is added again to the supplied signal, so that, from the second addition stage (143B), with closed switching means (142), the supplied measurement signal (ms_{A} = ms_{E} - msₓ + msₓ) is output and supplied to the output of the force measuring device (1), and, with opened switching means (142), the output signal (ms_{A} = 0 + msₓ) of the measuring unit (145) is output and supplied to the output of the force measuring device (1).

4. The method according to Claim 1, 2 or 3, **characterized in that** the filtered measurement signal (ms_{E}) is monitored by means of a second detector module (152) provided in a control unit (15) for the occurrence of load alternations and/or by means of a third detector module (153) for the occurrence of load changes, after which, when load alternations and/or load changes occur, the switching means (142) are actuated in such a manner that the filtered and delayed measurement signal (ms_{E}) passes through the switching means (142) to the output thereof (ms_{A} = ms_{E}).

5. The method according to Claim 1, 2, 3 or 4, **characterized in that** the filtered measurement signal (ms_{E}) and the output signal (msₓ) of the measuring unit (145), which is temporally delayed with respect to the filtered measurement signal by means of the first and/or a second delay element (141A, 141B), are supplied in the control unit (15) to an addition stage (155) which forms a difference signal (Δ) therefrom, which,
- in the first detector module (151), in a first threshold value module (1512), at the correct amount, is compared with a fixed or variable threshold value, in order to detect disturbances; and/or which,
- in the second detector module (152), is compared with a fixed or variable threshold value, in order to detect load alternations; and/or,
- in the third detector module (153), is supplied either directly or via a limiter (1534) to an integrator (1538), the output signal of which is compared, in a threshold value circuit (1539), at the correct amount, with at least one threshold value which, if exceeded, indicates that a load change has occurred and which indicates the compensation of the load change if it is undershot subsequently.

6. The method according to Claim 5, **characterized in that**
- in the first detector module (151), a statistics module (1524) is provided, by means of which the variance of the difference signal (Δ) is calculated, and depending on which the threshold value in the first threshold value module (1512) is set; and/or,
- in the third detector module (153), a zero crossing of the difference signal (Δ) is detected by means of a module (1531), and, in a downstream counter (1532), a counter value depending on the zero crossing is generated, which forms a first weighting factor (W1), preferably raised to a power, by means of which the difference signal (Δ) is weighted in a multiplier (1535), before it is supplied to the integrator (1538); and/or,
- in a threshold value module (1537) provided in the third detector module (153), the difference signal (Δ) is compared, at the correct amount, with at least one threshold value, in order to form a second weighting factor (W2) which is used for controlling the integrator (1538), in order to return the output signal thereof if the difference signal (Δ) is approximately equal to zero; and/or
- the output signal of the integrator (1538) is compared in a downstream threshold value unit with at least one higher first threshold value, in order to detect a load change, and subsequently compared with a lower second threshold value in order to detect that the force measuring device has followed the load change.

7. The method according to any one of Claims 1-6, **characterized in that** at least the filtered measurement signal (ms_{E}) and/or the difference signal (Δ) is/are supplied to a trained neuronal network (1500) which detects whether the signal changes occurring were caused by a possibly mechanical disturbance, by a load alternation and/or by a load change, after which the filter parameters and/or the switching means (142) are controlled accordingly.

8. The method according to any one of Claims 1-7, **characterized in that** the filtered measurement signal (ms_{SE}) supplied to the input of the switching means (142) is supplied via a first signal path provided with a switch (1421) and a limiter (1428) to a first input (A) and via a second signal path directly to a second input (B) of a change-over switch (1422), wherein,
- in the case of absence of external influences such as disturbances, load alternations and load changes, the switch (1421) controlled by the first detector module (151) is closed, and the change-over switch (1422) controlled by the second and/or third detector module (152, 153) is switched to the first input (A);
- in the case of the detection of a disturbance by the first detector module (151), said module opens the switch (1421), and, after the subsidence of the disturbance, it closes the switch (1421) again preferably only after n clock cycles; and,
- in the case of the detection of a load alternation or of a load change by the second or third detector module (152, 153), said module switches the change-over switch (1422) to the second input (B) and switched back again preferably only after the stabilization of the measurement system.

9. The method according to any one of Claims 1-8, **characterized in that** the measurement signal (ms_{E}) is filtered in a digital and/or analogue filter stage (11, 13), before it is supplied to the switching means (142) and/or **in that** the measurement signal (ms_{SA}) output by the switching means (142) is filtered in a digital and/or analogue filter stage (11, 13), before it is supplied to the output of the force measuring device (1), optionally to a processor or to a display unit (16).

10. A force measuring device (1), in particular a scale, suitable for carrying out the method according to any one of Claims 1 to 9, with a transducer (10) by means of which a measurement signal (ms) corresponding to an applied load is formed, which can be filtered in an analogue filter (11) and/or, after processing, in an analogue/digital converter (12), in a digital filter (13₁,...,13ₙ), in order to suppress interfering signal portions caused by external influences such as mechanical disturbances, load alternations and load changes, **characterized in that** the measurement signal of a first delay element (141A) can be supplied with a fixed delay time, by means of which, at the output thereof, a delayed but interference-free measurement signal can be output, which can be supplied to a switching means (142), wherein the fixed delay time exceeds the switching time of the switching means (142), and **in that** the filtered and delayed measurement signal (ms_{A}) can be supplied to a measuring unit (145), by means of which, at the output thereof,
- the value of measurement signal (ms_{A}) which has been supplied with delay and held, or
- an average value formed from the last values of the filtered and delayed measurement signal (ms_{A}) that occurred within a time interval, or
- an expected value of the filtered and delayed measurement signal (ms_{A}) that is formed based on the last values of the measurement signal (ms) that occurred within a time interval, can be output, and **in that** the filtered measurement signal (ms_{E}) can be monitored by means of a first detector module (151) provided in a control unit (15) for the occurrence of interfering signals, wherein, after detection of an interfering signal, switching means (142) can be actuated in such a manner that the supply of the filtered and delayed measurement signal (ms_{A}) to the measuring unit (145) can be interrupted, and, instead of the filtered and delayed measurement signal (ms_{A}), the output signal (msₓ) of the measuring unit (145) can be supplied to the downstream modules of the force measuring device (1).

11. The force measuring device (1) according to Claim 10, **characterized in that** the filtered measurement signal (ms_{E}) of the measuring unit (145) can be supplied via at least one first delay element (141A), or the output signal of the measuring unit (145) can be output via at least one delay element (141A), or **in that** a delayed output of the output signal within the measuring unit (145) is implemented optionally by means of the processes provided for the formation of the average value or of the expected value.

12. The force measuring device (1) according to Claim 10 or 11, **characterized in that** the filtered measurement signal (ms_{E}) can supplied preferably via the first delay element (141A) and a first addition stage (143A), in which the output signal (msₓ) of the measuring unit (145) can be subtracted from the filtered measurement signal (ms_{E}), as well as via the switching means (142) of a second addition stage (143B), in which the output signal (msx) of the measuring unit (145) can be added again to the supplied signal, so that, from the second addition stage (143B), with closed switching means (142), the supplied measurement signal (ms_{A} = ms_{E} - msₓ + msₓ), and, with opened switching means (142), the output signal (ms_{A} = 0 + msₓ) of the measuring unit (145) can be output and supplied to the output of the force measuring device (1).

13. The force measuring device (1) according to Claim 10, 11 or 12, **characterized in that** the filtered measurement signal (ms_{E}) can be monitored by means of a second detector module (152) provided in a control unit (15) for the occurrence of load alternations and/or by means of a third detector module (153) for the occurrence of load changes, by means of which, in the case of occurrence of load alternations and/or load changes, the switching means (142) can be actuated in such a manner that the filtered measurement signal (ms_{E}) passes through the switching means (142) to the output thereof (ms_{A} = ms_{E})

14. The force measuring device (1) according to Claim 10, 11, 12 or 13, **characterized in that** the filtered measurement signal (ms_{E}) and the output signal (msₓ) of the measuring unit (145), which is temporally delayed with respect to the filtered measurement signal by means of the first and/or a second delay element (141A, 141B), can be supplied in the control unit (15) to an addition stage (155), by means of which a difference signal (Δ) can be generated therefrom, which,
- in the first detector module (151), in a first threshold value module (1512), at the correct amount, can be compared with a fixed or variable threshold value, in order to detect disturbances, and/or,
- in the second detector module (152), can be compared, at the correct amount, with a fixed or variable threshold value, in order to detect load alternations; and/or,
- in the third detector module (153), can be supplied either directly or via a limiter (1534) to an integrator (1538), the output signal of which can be compared, in a threshold value circuit (1539), at the correct amount, with at least one threshold value, which, if exceeded, indicates that a load change has occurred and which indicates the compensation of the load change if it is undershot subsequently.

15. The force measuring device (1) according to Claim 14, **characterized in that**
- in the first detector module (151), a statistics module (1524) is provided, by means of which the variance of the difference signal (Δ) can be calculated and as a function of which the threshold value can be set in the first threshold value module (1512); and/or
- in the third detector module (153), a zero crossing of the difference signal (Δ) can be detected by means of a module (1531), and, in a downstream counter (1532), a counter value which is dependent on the zero crossing can be generated, which preferably forms preferably raised to a power a first weighting factor (W1), by means of which the difference signal (Δ) is weighted in a multiplier (1535), before it is supplied to the integrator (1538); and/or
- the difference signal (Δ), in threshold value module (1537) provided in the third detector module (153), can be compared, at the correct amount, with at least one threshold value, in order to form a second weighting factor (W2) which can be used for controlling the integrator (1538) in such a manner that the output signal thereof is returned if the difference signal (Δ) is approximately equal to zero; and/or
- the output signal of the integrator (1538) can be compared, in a downstream threshold value unit, with at least one higher first threshold value, in order to detect a load change, and after the detection of the load change it can be compared with a lower second threshold value in order to detect that the force measuring device has followed the load change.

16. The force measuring device (1) according to any one of Claims 10-15, **characterized in that** at least the filtered measurement signal (ms_{E}) and/or the difference signal (Δ) can be supplied to a trained neuronal network (1500) which detects whether occurring signal changes were caused by a possibly mechanical disturbance, by a load alternation and/or by a load change, after which the filter parameters and/or the switching means (142) can be controlled accordingly.

17. The force measuring device (1) according to any one of Claims 10-16, **characterized in that** the filtered measurement signal (ms_{SE}) supplied to the input of the switching means (142) can be supplied via a first signal path provided with a switch (1421) and with a limiter (1428) to a first input (A) and via a second signal path directly to a second input (B) of a change-over switch (1422), wherein
- in the case of absence of external influences such as disturbances, load alternations and load changes, the switch (1421) which can be controlled by the first detector module (151) is closed, and the change-over switch (1422) which can be controlled by the second and/or third detector module (152, 153) is switched to the first input (A);
- in the case of the detection of a disturbance by the first detector module (151), the switch (1421) can be opened by said module and after the subsidence of the disturbance, the switch (1421) can be closed again preferably after n clock cycles; and,
- in the case of the detection of a load alternation or of a load change by the second or third detector module (152, 153), the change-over switch (1422) can be switched by said detector modules to the second input (B) and switched back again preferably only after the stabilization of the measurement system.

18. The force measuring device (1) according to any one of Claims 10 to 17, **characterized in that** digital and/or analogue filter stages (11, 13) are upstream or downstream of the switching means (142).

## Revendications

1. Procédé pour le traitement du signal de sortie d'un transducteur de mesure (10) prévu dans un dispositif de mesure de force (1), en particulier une balance, par lequel est formé un signal de mesure (ms) correspondant à une charge appliquée, lequel est filtré dans un filtre analogique (11) et/ou dans un filtre numérique (13₁, ..., 13ₙ) après le traitement dans un convertisseur analogique-numérique (12), afin de supprimer des composantes de signal parasites produites par des dysfonctionnements mécaniques, des changements de charge et des modifications de charge, **caractérisé en ce que** le signal de mesure filtré (ms_{E}) est appliqué à un premier élément de retard (141A) avec un temps de retard prédéterminé, au moyen duquel un signal de mesure filtré et retardé (ms_{A}) est émis à la sortie de celui-ci, lequel est appliqué à un moyen de commutation (142), le temps de retard prédéterminé dépassant le temps de commutation du moyen de commutation (142), et **en ce que** le signal de mesure filtré et retardé (ms_{A}) est appliqué à une unité de valeurs de mesure (145) au moyen de laquelle, à la sortie de celle-ci,
- la valeur fournie de façon retardée et maintenue du signal de mesure filtré et retardé (ms_{A}), ou
- une valeur moyenne formée à partir des dernières valeurs du signal de mesure filtré et retardé (ms_{A}) apparaissant dans un intervalle de temps, ou
- une valeur attendue du signal de mesure filtré et retardé (ms_{A}), formée à l'aide des dernières valeurs du signal de mesure (ms) apparaissant dans un intervalle de temps,
est délivrée, et **en ce que** le signal de mesure filtré (ms_{E}) est surveillé quant à l'apparition de signaux parasites, au moyen d'un premier module détecteur (151) prévu dans une unité de commande (15), dans lequel, après la détection d'un signal parasite, le moyen de commutation (142) est actionné de telle façon que l'application du signal de mesure filtré et retardé (ms_{A}) à l'unité de valeurs de mesure (145) est interrompue, et le signal de sortie (ms_{X}) de l'unité de valeurs de mesure (145) est appliqué aux modules suivants du dispositif de mesure de force (1) à la place du signal de mesure filtré et retardé (ms_{A}).

2. Procédé selon la revendication 1, **caractérisé en ce que** l'émission du signal de sortie à la sortie de l'unité de valeurs de mesure (145) est réalisée de façon retardée, en appliquant le signal de mesure filtré (ms_{E}) de l'unité de valeurs de mesure (145) au moins par le biais du premier élément de retard (141A) ou en délivrant le signal de sortie de l'unité de valeurs de mesure (145) au moins par le biais du premier élément de retard (141A), ou en appliquant le retard dans l'unité de valeurs de mesure (145) le cas échéant au moyen des processus prévus pour former la valeur moyenne ou la valeur attendue.

3. Procédé selon la revendication 1 ou 2, **caractérisé en ce que** le signal de mesure filtré (ms_{E}) est appliqué de préférence par le biais du premier élément de retard (141A) et d'un premier étage additionneur (143A), dans lequel le signal de sortie (ms_{X}) de l'unité de valeurs de mesure (145) est soustrait du signal de mesure filtré (ms_{E}), ainsi que par le biais des moyens de commutation (142) d'un deuxième étage additionneur (143B), dans lequel le signal de sortie (ms_{X}) de l'unité de valeurs de mesure (145) est de nouveau ajouté au signal appliqué, de telle façon que le deuxième étage additionneur (143B), lorsque les moyens de commutation (142) sont fermés, émet le signal de mesure appliqué (ms_{A} = ms_{E} - ms_{X} + ms_{X}) et, lorsque les moyens de commutation (142) sont ouverts, émet le signal de sortie (ms_{A} = 0 + ms_{X}) de l'unité de valeurs de mesure (145) et les applique à la sortie du dispositif de mesure de force (1).

4. Procédé selon la revendication 1, 2 ou 3, **caractérisé en ce que** le signal de mesure filtré (ms_{E}) est surveillé quant à l'apparition de changements de charge au moyen d'un deuxième module détecteur (152) prévu dans une unité de commande (15) et/ou quant à l'apparition de modifications de charge, au moyen d'un troisième module détecteur (153), après quoi, lors de l'apparition de changements de charge et/ou de modifications de charge, les moyens de commutation (142) sont actionnés de telle façon, que le signal de mesure filtré et retardé (ms_{A}) traverse les moyens de commutation (142) jusqu'à la sortie de ceux-ci (ms_{A} = ms_{E}).

5. Procédé selon la revendication 1, 2, 3 ou 4, **caractérisé en ce que** le signal de mesure filtré (ms_{E}) et le signal de mesure (ms_{X}) de l'unité de valeurs de mesure (145) retardé dans le temps par rapport à celui-ci au moyen du premier et/ou d'un deuxième élément de retard (141A, 141B) sont appliqués à un étage additionneur (155) dans l'unité de commande (15), celui-ci formant alors un signal de différence (Δ), lequel
- est comparé selon un montant juste avec une valeur seuil fixe ou variable dans un premier module de valeurs seuil (1512) dans le premier module détecteur (151) pour détecter des dysfonctionnements ; et/ou
- est comparé selon un montant juste avec une valeur seuil fixe ou variable dans le deuxième module détecteur (152), pour détecter des changements de charge ; et/ou
- est appliqué directement ou par le biais d'un limiteur (1534) à un intégrateur (1538) dans le troisième module détecteur (153), dont le signal de sortie est comparé selon un montant juste dans un circuit de valeurs seuil (1539) avec au moins une valeur seuil dont le dépassement indique une modification de charge survenue et dont le sous-passement consécutif indique la compensation de la modification de charge.

6. Procédé selon la revendication 5, **caractérisé en ce que**
- dans le premier module détecteur (151), il est prévu un module de statistiques (1524), au moyen duquel la variance du signal de différence (Δ) est calculée et la valeur seuil est définie en fonction dans le premier module de valeurs seuil (1512) ; et/ou
- dans le troisième module détecteur (153), un passage par zéro du signal de différence (Δ) est constaté au moyen d'un module (1531), et une valeur de compteur dépendante du passage par zéro est produite dans le compteur (1532) en aval, laquelle forme un premier facteur de pondération (W1), de préférence élevé à la puissance, au moyen duquel le signal de différence (Δ) est pondéré dans un multiplicateur (1535), avant d'être appliqué à l'intégrateur (1538) ; et/ou
- le signal de différence (Δ) est comparé selon un montant juste dans un module de valeurs seuil (1537) prévu dans le troisième module détecteur (153) avec au moins une valeur seuil, pour former un deuxième facteur de pondération (W2) utilisé pour commander l'intégrateur (1538), pour renvoyer le signal de sortie de celui-ci lorsque le signal de différence (Δ) est approximativement égal à zéro ; et/ou
- le signal de sortie de l'intégrateur (1538) est comparé avec au moins une première valeur seuil plus élevée dans une unité de valeurs seuil disposée en aval, pour détecter une modification de charge, puis comparé avec une deuxième valeur seuil moins élevée, pour constater que le dispositif de mesure de force a suivi la modification de charge.

7. Procédé selon l'une des revendications 1 à 6, **caractérisé en ce qu'**au moins le signal de mesure filtré (ms_{E}) et/ou le signal de différence (Δ) est/sont appliqué(s) à un réseau neuronal entraîné (1500), lequel détermine si des modifications de signaux produites ont été causées par un éventuel dysfonctionnement mécanique, par un changement de charge et/ou par une modification de charge, après quoi les paramètres de filtre et/ou les moyens de commutation (142) sont commandés en conséquence.

8. Procédé selon l'une des revendications 1 à 7, **caractérisé en ce que** le signal de mesure filtré (ms_{SE}) appliqué à l'entrée des moyens de commutation (142) est appliqué par le biais d'un premier trajet de signaux doté d'un commutateur (1421) et d'un limiteur (1428) à une première entrée (A) et par le biais d'un deuxième trajet de signaux directement à une deuxième entrée (B) d'un inverseur (1422), dans lequel
- en l'absence d'influences extérieures, telles que des dysfonctionnements, des changements de charge et des modifications de charge, le commutateur (1421) commandé par le premier module détecteur (151) est fermé et l'inverseur (1422) commandé par le deuxième et/ou le troisième module détecteur (152, 153) est commuté sur la première entrée (A) ;
- lors de la détection d'un dysfonctionnement par le premier module détecteur (151), celui-ci ouvre le commutateur (1421) et, après disparition du dysfonctionnement, celui-ci referme le commutateur (1421) de préférence seulement après n cycles d'horloge ; et
- lors de la détection d'un changement de charge ou d'une modification de charge par le deuxième ou le troisième module détecteur (152, 153), celui-ci commute l'inverseur (1422) sur la deuxième entrée (B) et le rétablit de préférence seulement après la stabilisation du système de mesure.

9. Procédé selon l'une des revendications 1 à 8, **caractérisé en ce que** le signal de mesure (ms_{E}) est filtré dans un étage de filtration numérique et/ou analogique (11, 13), avant d'être appliqué aux moyens de commutation (142), et/ou **en ce que** le signal de mesure (ms_{SA}) émis par les moyens de commutation (142) est filtré dans un étage de filtration numérique et/ou analogique (11, 13) avant d'être appliqué à la sortie du dispositif de mesure de force (1), le cas échéant à un processeur ou à une unité d'affichage (16).

10. Dispositif de mesure de force (1), en particulier une balance (1), adapté(e) pour exécuter le procédé selon l'une des revendications 1 à 9, avec un transducteur de mesure (10) par lequel est formé un signal de mesure (ms) correspondant à une charge appliquée, lequel peut être filtré dans un filtre analogique (11) et/ou dans un filtre numérique (13₁, ..., 13ₙ) après traitement dans un convertisseur analogique -numérique (12), afin de supprimer des composantes de signal parasites produites par des dysfonctionnements mécaniques, des changements de charge et des modifications de charge, **caractérisé en ce que** le signal de mesure d'un premier élément de retard (141A) est applicable avec un temps de retard prédéterminé, au moyen duquel un signal de mesure retardé mais sans parasites peut être émis à la sortie de celui-ci, lequel peut être appliqué à un moyen de commutation (142), le temps de retard prédéterminé dépassant le temps de commutation du moyen de commutation (142), et **en ce que** le signal de mesure filtré et retardé (ms_{A}) est appliqué à une unité de valeurs de mesure (145) au moyen de laquelle, à la sortie de celle-ci,
- la valeur fournie de façon retardée et maintenue du signal de mesure filtré et retardé (ms_{A}), ou
- une valeur moyenne formée à partir des dernières valeurs du signal de mesure filtré et retardé (ms_{A}) apparaissant dans un intervalle de temps, ou
- une valeur attendue du signal de mesure filtré et retardé (ms_{A}), formée à l'aide des dernières valeurs du signal de mesure (ms) apparaissant dans un intervalle de temps,
peut être délivrée, et **en ce que** le signal de mesure filtré (ms_{E}) peut être surveillé quant à l'apparition de signaux parasites, au moyen d'un premier module détecteur (151) prévu dans une unité de commande (15), où, après la détection d'un signal parasite, des moyens de commutation (142) peuvent être actionnés de telle façon que l'application du signal de mesure filtré et retardé (ms_{A}) à l'unité de valeurs de mesure (145) peut être interrompue, et le signal de sortie (ms_{X}) de l'unité de valeurs de mesure (145) peut être appliqué aux modules suivants du dispositif de mesure de force (1) à la place du signal de mesure filtré et retardé (ms_{A}).

11. Dispositif de mesure de force (1) selon la revendication 10, **caractérisé en ce que** le signal de mesure filtré (ms_{E}) de l'unité de valeurs de mesure (145) peut être appliqué par le biais d'au moins un premier élément de retard (141A) ou **en ce que** le signal de sortie de l'unité de valeurs de mesure (145) peut être émis par le biais d'au moins un premier élément de retard (141A), ou **en ce qu'**une émission retardée du signal de sortie dans l'unité de valeurs de mesure (145) est réalisée le cas échéant au moyen des processus prévus pour former la valeur moyenne ou la valeur attendue.

12. Dispositif de mesure de force (1) selon la revendication 10 ou 11, **caractérisé en ce que** le signal de mesure filtré (ms_{E}) peut être appliqué de préférence par le biais du premier élément de retard (141A) et d'un premier étage additionneur (143A), dans lequel le signal de sortie (ms_{X}) de l'unité de valeurs de mesure (145) peut être soustrait du signal de mesure filtré (ms_{E}), ainsi que par le biais des moyens de commutation (142) d'un deuxième étage additionneur (143B), dans lequel le signal de sortie (ms_{X}) de l'unité de valeurs de mesure (145) est de nouveau ajouté au signal appliqué, de telle façon que le deuxième étage additionneur (143B), lorsque les moyens de commutation (142) sont fermés, émet le signal de mesure appliqué (ms_{A} = ms_{E} - ms_{X} + ms_{X}) et, lorsque les moyens de commutation (142) sont ouverts, émet le signal de sortie (ms_{A} = 0 + ms_{X}) de l'unité de valeurs de mesure (145) et les applique à la sortie du dispositif de mesure de force (1).

13. Dispositif de mesure de force (1) selon la revendication 10, 11 ou 12, **caractérisé en ce que** le signal de mesure filtré (ms_{E}) peut être surveillé quant à l'apparition de changements de charge au moyen d'un deuxième module détecteur (152) prévu dans une unité de commande (15) et/ou quant à l'apparition de modifications de charge, au moyen d'un troisième module détecteur (153), au moyen desquels les moyens de commutation (142) peuvent être actionnés lors de l'apparition de changements de charge et/ou de modifications de charge, de telle façon que le signal de mesure filtré (ms_{E}) traverse les moyens de commutation (142) jusqu'à la sortie de ceux-ci (ms_{A} = ms_{E}).

14. Dispositif de mesure de force (1) selon la revendication 10, 11, 12 ou 13, **caractérisé en ce que** le signal de mesure filtré (ms_{E}) et le signal de mesure (ms_{X}) de l'unité de valeurs de mesure (145) retardé dans le temps par rapport à celui-ci au moyen du premier et/ou d'un deuxième élément de retard (141A, 141B) peuvent être appliqués à un étage additionneur (155) dans l'unité de commande (15), au moyen duquel un signal de différence (Δ) peut ainsi être formé, lequel
- peut être comparé selon un montant juste avec une valeur seuil fixe ou variable dans un premier module de valeurs seuil (1512) dans le premier module détecteur (151) pour détecter des dysfonctionnements ; et/ou
- peut être comparé selon un montant juste avec une valeur seuil fixe ou variable dans le deuxième module détecteur (152), pour détecter des changements de charge ; et/ou
- peut être appliqué directement ou par le biais d'un limiteur (1534) à un intégrateur (1538) dans le troisième module détecteur (153), dont le signal de sortie peut être comparé selon un montant juste dans un circuit de valeurs seuil (1539) avec au moins une valeur seuil dont le dépassement indique une modification de charge survenue et dont le sous-passement consécutif indique la compensation de la modification de charge.

15. Dispositif de mesure de force (1) selon la revendication 14, **caractérisé en ce que**
- dans le premier module détecteur (151), il est prévu un module de statistiques (1524), au moyen duquel la variance du signal de différence (Δ) peut être calculée et la valeur seuil peut être définie en fonction dans le premier module de valeurs seuil (1512) ; et/ou
- dans le troisième module détecteur (153), un passage par zéro du signal de différence (Δ) peut être constaté au moyen d'un module (1531), et une valeur de compteur dépendante du passage par zéro est produite dans un compteur (1532) installé en aval, laquelle forme un premier facteur de pondération (W1), de préférence élevé à la puissance, au moyen duquel le signal de différence (Δ) est pondéré dans un multiplicateur (1535), avant d'être appliqué à l'intégrateur (1538) ; et/ou
- le signal de différence (Δ) peut être comparé selon un montant juste dans un module de valeurs seuil (1537) prévu dans le troisième module détecteur (153) avec au moins une valeur seuil, pour former un deuxième facteur de pondération (W2) susceptible d'être utilisé pour commander l'intégrateur (1538) de telle façon que le signal de sortie de celui-ci peut être renvoyé dans le cas où le signal de différence (Δ) est approximativement égal à zéro ; et/ou
- le signal de sortie de l'intégrateur (1538) est comparé avec au moins une première valeur seuil plus élevée dans une unité de valeurs seuil disposée en aval, pour détecter une modification de charge, puis comparé avec une deuxième valeur seuil moins élevée après la détermination de la modification de charge, pour constater que le dispositif de mesure de force a suivi la modification de charge.

16. Dispositif de mesure de force (1) selon l'une des revendications 10 à 15, **caractérisé en ce qu'**au moins le signal de mesure filtré (ms_{E}) et/ou le signal de différence (Δ) peut/peuvent être appliqué(s) à un réseau neuronal entraîné (1500), lequel détermine si des modifications de signaux produites ont été causées par un éventuel dysfonctionnement mécanique, par un changement de charge et/ou par une modification de charge, après quoi les paramètres de filtre et/ou les moyens de commutation (142) peuvent être commandés en conséquence.

17. Dispositif de mesure de force (1) selon l'une des revendications 10 à 16, **caractérisé en ce que** le signal de mesure filtré (ms_{SE}) appliqué à l'entrée des moyens de commutation (142) peut être appliqué par le biais d'un premier trajet de signaux doté d'un commutateur (1421) et d'un limiteur (1428) à une première entrée (A) et par le biais d'un deuxième trajet de signaux directement à une deuxième entrée (B) d'un inverseur (1422), dans lequel
- en l'absence d'influences extérieures, telles que des dysfonctionnements, des changements de charge et des modifications de charge, le commutateur (1421) susceptible d'être commandé par le premier module détecteur (151) est fermé et l'inverseur (1422) susceptible d'être commandé par le deuxième et/ou le troisième module détecteur (152, 153) est commuté sur la première entrée (A) ;
- lors de la détection d'un dysfonctionnement par le premier module détecteur (151), celui-ci peut ouvrir le commutateur (1421) et, après disparition du dysfonctionnement, celui-ci peut refermer le commutateur (1421) de préférence seulement après n cycles d'horloge ; et
- lors de la détection d'un changement de charge ou d'une modification de charge par le deuxième ou le troisième module détecteur (152, 153), celui-ci peut commuter l'inverseur (1422) sur la deuxième entrée (B) et le rétablir de préférence seulement après la stabilisation du système de mesure.

18. Dispositif de mesure de force (1) selon l'une des revendications 10 à 17, **caractérisé en ce que** des étages de filtration numérique et/ou analogique (11, 13) sont installés en amont ou en aval des moyens de commutation (142).
